# EUROPEAN PATENT APPLICATION

(11) **EP 4 266 606 A1**
(43) Date of publication of application: **25.10.2023**
(21) Application number: 21906463.1
(22) Date of filing: 08.12.2021
(51) Int. Cl.: H04L 1/00, H04L 27/26, H04W 72/08, H04W 72/12

(54) **COMMUNICATION APPARATUS AND COMMUNICATION METHOD**

(30) Priority: 16.12.2020 JP 2020208735
(71) Applicant: Sony Group Corporation, Tokyo 108-0075 (JP)
(72) Inventor: MATSUDA, Hiroki, Tokyo 108-0075 (JP); TSUDA, Shinichiro, Tokyo 108-0075 (JP)
(74) Representative: Witte, Weller & Partner Patentanwälte mbB
(86) International application number: PCT/JP2021/045120
(87) International publication number: WO 2022/131100

(57) **Abstract**

A communication apparatus includes a generation unit that generates a bit sequence including a system bit sequence part and a parity bit sequence part, and a processing unit that performs at least one of mapping of the bit sequence to a complex signal point and mapping of the complex signal point mapped with the bit sequence to a resource based on a predetermined condition regarding a channel state.

## Description

### Field

The present disclosure relates to a communication apparatus and a communication method.

### Background

Non Patent Literatures 1 and 2 are examples of standards related to cellular communication technology. Non Patent Literatures 1 and 2 define coding, multiplexing, physical channels, modulation schemes, and the like. For example, a bit sequence of a transport block (TB) carried from an upper layer (e. g., medium access control (MAC) layer) is converted into a plurality of complex signal points (a plurality of complex-valued modulation symbols) through a plurality of processes such as CRC attachment (addition of a parity bit sequence), segmentation, coding, and rate matching, and finally mapped to a resource block.

### Citation List

### Non Patent Literature

Non Patent Literature 1:3GPP TS 38.212 v16.3.0 Multiplexing and channel coding
Non Patent Literature 2:3GPP TS 38.211 v16.0.0 Physical channels and modulation

### Summary

### Technical Problem

However, conversion into a plurality of complex signal points (a plurality of complex-valued modulation symbols) and the subsequent mapping to a resource block in Non Patent Literature 2 do not consider a radio quality. For example, in a case where the plurality of complex signal points (the plurality of complex-valued modulation symbols) is multiplexed in a time axis direction and mapped on the resource block, there is a possibility that a complex signal point corresponding to a bit sequence of TB is mapped on a resource element with degraded radio quality. In this case, an error rate is degraded.

Therefore, the present disclosure proposes a communication apparatus and a communication method that can contribute to suppression of deterioration of the error rate of the bit sequence.

Note that the above problem or object is merely one of a plurality of problems or objects that can be solved or achieved by a plurality of embodiments disclosed in the present specification.

### Solution to Problem

In order to solve the above problem, a communication apparatus according to one aspect of the present disclosure includes: a generation unit that generates a bit sequence including a system bit sequence part and a parity bit sequence part; and a processing unit that performs at least one of mapping of the bit sequence to a complex signal point and mapping of the complex signal point mapped with the bit sequence to a resource, the mapping being performed based on a predetermined condition regarding a channel state.

### Brief Description of Drawings

FIG. 1A is a diagram illustrating a change in radio quality in a resource.
FIG. 1B is a diagram illustrating the change in radio quality in the resource.
FIG. 2 is a diagram illustrating a configuration example of a communication system according to an embodiment of the present disclosure.
FIG. 3 is a diagram illustrating a configuration example of a management device according to the embodiment of the present disclosure.
FIG. 4 is a diagram illustrating a configuration example of a base station according to the embodiment of the present disclosure.
FIG. 5 is a diagram illustrating a configuration example of a relay station according to the embodiment of the present disclosure.
FIG. 6 is a diagram illustrating a configuration example of a terminal device according to the embodiment of the present disclosure.
FIG. 7 is a diagram illustrating an example of a 5G architecture.
FIG. 8 is a sequence diagram illustrating an example of a registration procedure.
FIG. 9 is a diagram illustrating a configuration example of a transmission bit sequence.
FIG. 10 is a diagram illustrating a transmission resource determined by a communication apparatus.
FIG. 11 is a diagram illustrating mapping (first mapping means) of transmission bit sequence to one complex signal point.
FIG. 12 is a diagram illustrating mapping (second mapping means) of the transmission bit sequence to one complex signal point.
FIG. 13 is a diagram illustrating mapping (third mapping means) of the transmission bit sequence to one complex signal point.
FIG. 14 is a diagram illustrating mapping (first rule) of the transmission bit sequence to a plurality of complex signal points.
FIG. 15 is a diagram illustrating mapping (second rule) of the transmission bit sequence to the plurality of complex signal points.
FIG. 16 is a diagram illustrating mapping (third rule) of the transmission bit sequence to the plurality of complex signal points.
FIG. 17 is a diagram illustrating a state in which the complex signal point is mapped to the transmission resource according to a predetermined condition regarding a channel state.
FIG. 18 is a diagram illustrating frequency-prioritized mapping.
FIG. 19 is a diagram illustrating time-prioritized mapping.
FIG. 20 is a diagram illustrating a sequence example according to signal processing of the present embodiment.
FIG. 21 is a diagram illustrating a sequence example of an example using machine learning.

### Description of Embodiments

Hereinafter, embodiments of the present disclosure will be described with reference to the drawings. In each of the following embodiments, same parts are given the same reference signs to omit redundant description.

In addition, in the present specification and the drawings, a plurality of components having substantially the same functional configuration may be distinguished by attaching different numerals after the same reference sign. For example, a plurality of configurations having substantially the same functional configuration is distinguished as terminal devices 40₁, 40₂, and 40₃ as necessary. However, when it is not particularly necessary to distinguish each of the plurality of components having substantially the same functional configuration, only the same reference sign is given. For example, in a case where it is not necessary to particularly distinguish the terminal devices 40₁, 40₂, and 40₃, they are simply referred to as terminal devices 40.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

The present disclosure will be described according to the following item order.
1. Outline
2. Configuration of communication system
   2-1. Overall configuration of communication system
   2-2. Configuration of management device
   2-3. Configuration of base station
   2-4. Configuration of relay station
   2-5. Configuration of terminal device
3. Network architecture
   3-1. Configuration example of network architecture
   3-2. Registration procedure
4. Signal processing of the present embodiment
   4-1. Outline of processing
   4-2. Generation of transmission bit sequence
   4-3. Determination of transmission resource
   4-4. Mapping of transmission bit sequence to complex signal point
   4-5. Mapping of complex signal point to transmission resource
   4-6. Sequence example
   4-7. Application example
5. Modification
6. Conclusion

### <<1. Outline>>

Radio access technology (RAT) such as long term evolution (LTE) and new radio (NR) has been studied in the third generation partnership project (3GPP). The LTE and NR are types of cellular communication technology, and enable mobile communication of a terminal device by arranging a plurality of cellular areas covered by a base station. Note that a single base station may manage a plurality of cells.

In the following description, the "LTE" includes LTE-Advanced (LTE-A), LTE-Advanced Pro (LTE-A Pro), and evolved universal terrestrial radio access (E-UTRA). Still more, the NR includes new radio access technology (NRAT) and further E-UTRA (FE-UTRA). Note that ae single base station may manage a plurality of cells. In the following description, a cell corresponding to the LTE is referred to as an LTE cell, and a cell corresponding to the NR is referred to as an NR cell.

The NR is the next generation (fifth generation) radio access technology (RAT) of LTE. The NR is the radio access technology that can support various use cases including enhanced mobile broadband (eMBB), massive machine type communications (mMTC), and ultra-reliable and low latency communications (URLLC). The NR has been studied aiming at a technical framework corresponding to use scenarios, requirements, arrangement scenarios, and the like in these use cases.

In recent years, further improvement in communication performance (e.g., further larger capacity, higher speed, lower delay, higher reliability, lower power consumption, or lower processing load) is desired. However, expected communication performance is not necessarily achieved with a conventional signal processing system.

For example, in the 5G, studies have been conducted to realize characteristics of ultra-high speed, low delay, high reliability, and multiple simultaneous connections. However, in the future, further improvement of the characteristics of the 5G is desired. Therefore, it is necessary to use a millimeter wave or a tera wave that can secure a wider bandwidth. As utilization of millimeter waves and terahertz waves progresses, it is assumed that resources with a wider bandwidth are allocated to user equipment (UE). However, since the radio quality differs for each frequency, it is assumed that a change in the radio quality in the resource also increases when a resource with a wide bandwidth is allocated.

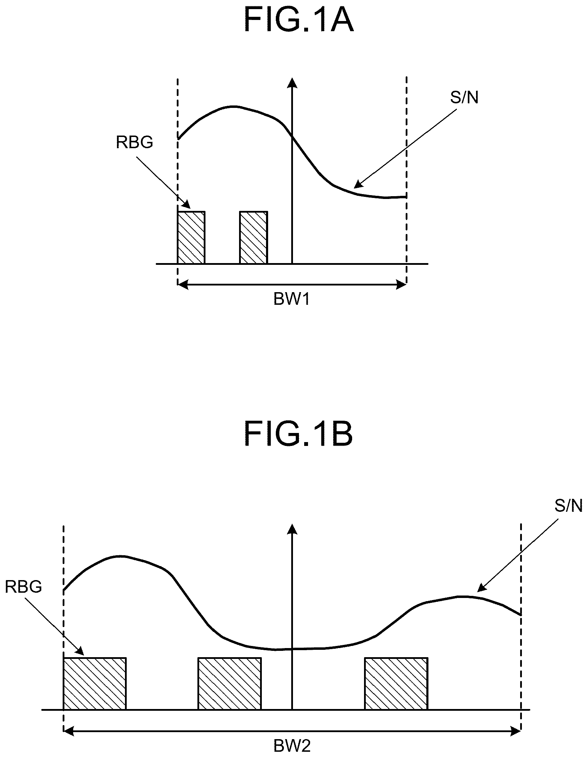

FIGS. 1A and 1B are diagrams illustrating a change in the radio quality in the resource. FIG. 1A is an example of a case where the operating bandwidth of the UE is narrow, and FIG. 1B is a case where an operating bandwidth of the UE is wide. Here, the operating bandwidth of the UE is a system bandwidth or a bandwidth of an active BWP. When a wider operating bandwidth can be configured for the UE, it is assumed that the operating bandwidth of the UE is widened in order to transmit and receive a larger amount of data. However, in this case, it is assumed that the base station may allocate a resource block group (RBG) with wider bandwidth to the UE. Here, the RBG is a set of consecutive resource blocks (RBs).

Shaded blocks illustrated in FIGS. 1A and 1B each indicate an RBG configured with consecutive resource elements (REs). In the case of FIG. 1A, a RBG bandwidth is relatively narrow. Therefore, a change in the radio quality (e.g., reception S/N) in the RBG is small. On the other hand, in the case of FIG. 1B, the RBG bandwidth is relatively wide. Therefore, a change in the radio quality (e.g., reception S/N) in the RBG becomes large. In a case where the change in the radio quality in an allocated resource (in the RBG) is large, a frequency utilization efficiency deteriorates just by applying a conventional modulation scheme.

This will be described using a modulation scheme of the NR as an example. In the NR, a transmission bit sequence of one transport block is divided into a system bit sequence part and a parity bit sequence part. In some embodiments described above and below, the system bit sequence part is a portion of a bit string of data desired to be transmitted to a counterpart, such as user data. Furthermore, the parity bit sequence part is a portion of a redundant bit string added to the system bit sequence part for error detection or error correction. More specifically, the system bit sequence may be an input bit sequence in processing such as CRC attachment, segmentation, coding, and rate matching. For example, the system bit sequence may be bit sequences a_0, a_1, a_2 to a_A-1 in the CRC attachment. In this case, the parity bit sequence may be p_0, p_1, p_2 to p_L-1. Further or alternatively, the system bit sequence may also be bit sequences c_0, c_1, c_2 to c_K'-L-1 in a code block CRC attachment. In this case, the parity bit sequence may be at least one of p_0, p_1, p_2 to p_L-1 and c_K'-1 to c(K-1). Further or alternatively, the system bit sequence may be c_0, c_1, c_2 to c_K-1 in LDPC coding. In this case, the parity bit sequence may be N+2Z_c-K-1 pieces of w_0, w_1, w_2 to w_(N+ 2Z_c-K-1).

In the case of the example in FIG. 1A, since a change in the S/N in the RBG is small, a decrease in the frequency utilization efficiency is small even when the system bit sequence and the parity bit sequence are mapped to the complex signal point so as to obtain frequency diversity. However, in the case of the example in FIG. 1B, since the change in the S/N in the RBG is large, a decrease in the frequency utilization efficiency is large because it is necessary to transmit more parity bit sequences as compared with the case in FIG. 1A when the system bit sequence and the parity bit sequence are mapped to the complex signal point so as to obtain frequency diversity. In addition, in the case of FIG. 1B, since the change in the S/N in the RBG is large, it is considered that the number of times of retransmission is increased as compared with the case of FIG. 1A, and thus, there is a concern about a decrease in the frequency utilization efficiency due to retransmission.

Therefore, in the present embodiment, this problem is solved by the following means.

A communication apparatus (e.g., base station and terminal device) according to the present embodiment changes mapping related to modulation based on a channel state. For example, the communication apparatus generates a transmission bit sequence including the system bit sequence part and the parity bit sequence part. Then, the communication apparatus maps the transmission bit sequence to the complex signal point based on a predetermined condition regarding the channel state. Alternatively, the communication apparatus maps the complex signal point mapped with the transmission bit sequence to the resource based on the predetermined condition regarding the channel state. As a result, the communication apparatus according to the present embodiment can perform optimal mapping in accordance with the channel state, so that high communication performance (e.g., high frequency utilization efficiency and improvement of error rate characteristics) can be achieved.

The outline of the present embodiment has been described above, and a communication system according to the present embodiment will be described in detail below.

Note that, in the following description, terms such as "mapping the bit sequence to the complex signal point" and "mapping the complex signal point to the allocated resource" are used, but terms such as "modulation", "allocation", and "schedule" are also synonymous with "mapper".

### <<2. Configuration of communication system>>

Hereinafter, a configuration of a communication system 1 will be specifically described with reference to the drawings.

### <2-1. Overall configuration of communication system>

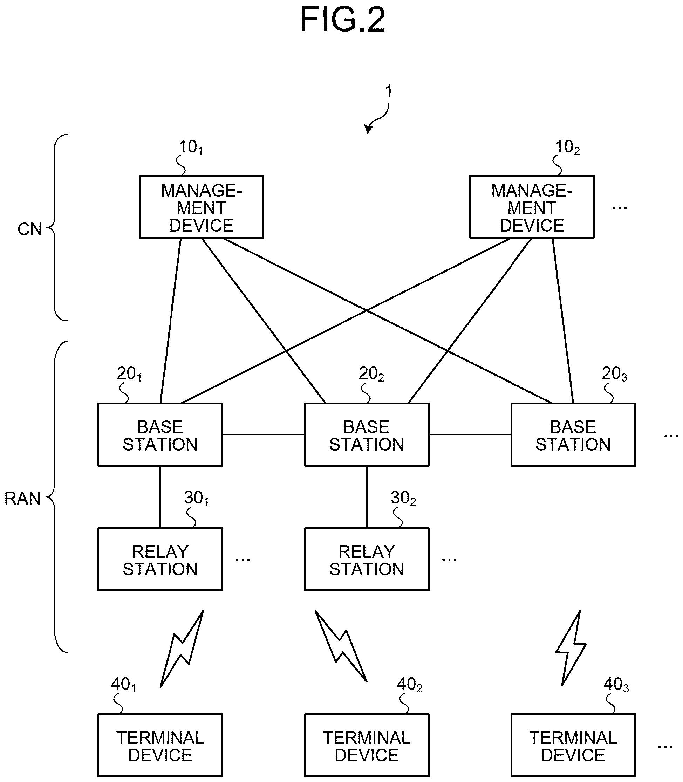

FIG. 2 is a diagram illustrating a configuration example of the communication system 1 according to the embodiment of the present disclosure. The communication system 1 includes a management device 10, a base station 20, a relay station 30, and a terminal device 40. The communication system 1 provides the user with a wireless network capable of mobile communication by coordinated operation of wireless communication apparatuses configuring the communication system 1. The wireless network of the present embodiment includes, for example, a radio access network and a core network. Note that, in the present embodiment, the wireless communication apparatus is a device having a function of wireless communication, and corresponds to the base station 20, the relay station 30, and the terminal device 40 in the example in FIG. 2.

The communication system 1 may include a plurality of management devices 10, a plurality of base stations 20, a plurality of relay stations 30, and a plurality of terminal devices 40. In the example in FIG. 2, the communication system 1 includes management devices 10₁ and 10₂ as the management device 10, and includes base stations 20₁ and 20₂ as the base station 20. Furthermore, the communication system 1 includes relay stations 30₁, 30₂ and the like as the relay station 30, and includes terminal devices 40₁, 40₂, 40₃, and the like as the terminal device 40.

Note that the devices in the drawings may be considered as devices in a logical sense. In other words, a part of the devices in the drawing may be realized by a virtual machine (VM), a container, a docker, or the like, and they may be implemented on physically the same hardware.

Note that the communication system 1 may support the radio access technology (RAT) such as long term evolution (LTE) or new radio (NR). The LTE and NR are types of cellular communication technology, and enable mobile communication of a terminal device by arranging a plurality of cellular areas covered by a base station.

Note that a radio access method used by the communication system 1 is not limited to the LTE and NR, and may be another radio access method such as wideband code division multiple access (W-CDMA) or code division multiple access 2000 (cdma2000).

Furthermore, the base station or the relay station configuring the communication system 1 may be a ground station or a non-ground station. The non-ground station may be a satellite station or an aircraft station. When the non-ground station is the satellite station, the communication system 1 may be a bent-pipe (transparent) type mobile satellite communication system.

In the present embodiment, the ground station (also referred to as a ground base station.) refers to a base station (including relay station) installed on the ground. Here, the "ground" is a ground in a broad sense including not only land but also underground, water, and underwater. Note that, in the following description, the "ground station" may be replaced with a "gateway".

Note that an LTE base station may be referred to as an evolved node B (eNodeB) or an eNB. Further, an NR base station may be referred to as a gNodeB or a gNB. In the LTE and NR, the terminal device (also referred to as a mobile station or a terminal) may be referred to as user equipment (UE). Note that the terminal device is a type of communication apparatus, and is also referred to as a mobile station or a terminal.

In the present embodiment, the concept of the communication apparatus includes not only a portable mobile device (terminal device) such as a mobile terminal but also a device installed in a structure or a mobile body. The structure or the mobile body itself may be regarded as the communication apparatus. In addition, the concept of the communication apparatus also includes the base station and the relay station in addition to the terminal device. The communication apparatus is one type of processor and information processor. Furthermore, the communication apparatus can be rephrased as a transmission device or a reception device.

Hereinafter, a configuration of each device configuring the communication system 1 will be specifically described. Note that the configuration of each device described below is merely an example. The configuration of each device may be different from the following configuration.

### <2-2. Configuration of management device>

Next, a configuration of the management device 10 will be described.

The management device 10 manages a wireless network. For example, the management device 10 is a device that manages communication of the base station 20. When the core network is an evolved packet core (EPC), the management device 10 is, for example, a device having a function as a mobility management entity (MME). When the core network is a 5G core network (5GC), the management device 10 is, for example, a device having a function as an access and mobility management function (AMF) and/or a session management function (SMF). Naturally, functions of the management device 10 are not limited to the MME, the AMF, and the SMF. For example, when the core network is the 5GC, the management device 10 may be a device having a function as a network slice selection function (NSSF), an authentication server function (AUSF), a policy control function (PCF), or a unified data management (UDM). Furthermore, the management device 10 may be a device having a function as a home subscriber server (HSS).

Note that the management device 10 may have a function of the gateway. For example, when the core network is the EPC, the management device 10 may have a function as a serving gateway (S-GW) or a packet data network gateway (P-GW). In addition, when the core network is the 5GC, the management device 10 may have a function as a user plane function (UPF).

The core network includes a plurality of network functions, and each network function may be aggregated into one physical device or distributed to a plurality of physical devices. In other words, the management device 10 can be dispersedly arranged in a plurality of devices. Further, this distributed arrangement may be controlled to be performed dynamically. The base station 20 and the management device 10 configure one network, and provide a wireless communication service to the terminal device 40. The management device 10 is connected to the Internet, and the terminal device 40 can use various services provided via the Internet via the base station 20.

Note that the management device 10 is not necessarily a device configuring the core network. For example, it is assumed that the core network is a wideband code division multiple access (W-CDMA) or code division multiple access (cdma2000) core network. In this case, the management device 10 may be a device that functions as a radio network controller (RNC).

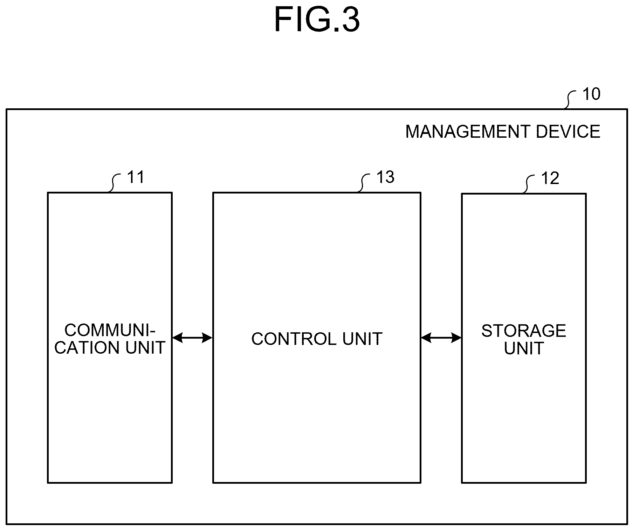

FIG. 3 is a diagram illustrating a configuration example of the management device 10 according to the embodiment of the present disclosure. The management device 10 includes a communication unit 11, a storage unit 12, and a control unit 13. Note that the configuration illustrated in FIG. 3 is a functional configuration, and a hardware configuration may be different from the functional configuration. Furthermore, functions of the management device 10 may be implemented in a statistically or dynamically distributed manner in a plurality of physically separated structures. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a universal serial bus (USB) interface including a USB host controller and a USB port. Furthermore, the communication unit 11 may be a wired interface or a wireless interface. The communication unit 11 functions as a communication means of the management device 10. The communication unit 11 communicates with the base station 20 and the like under the control of the control unit 13.

The storage unit 12 is a data readable/writable storage device such as a dynamic random access memory (DRAM), a static random access memory (SRAM), a flash memory, or a hard disk. The storage unit 12 functions as a storage means of the management device 10. The storage unit 12 stores, for example, a connection state of the terminal device 40. For example, the storage unit 12 stores a radio resource control (RRC) state or an EPS connection management (ECM) state or a 5G system connection management (CM) state of the terminal device 40. The storage unit 12 may function as a home memory that stores position information of the terminal device 40.

The control unit 13 is a controller that controls each part of the management device 10. The control unit 13 is realized by, for example, a processor such as a central processing unit (CPU), a micro processing unit (MPU), or a graphics processing unit (GPU). For example, the control unit 13 is implemented by a processor executing various programs stored in the storage device inside the management device 10 using a random access memory (RAM) or the like as a work area. Note that the control unit 13 may be realized by an integrated circuit such as an application specific integrated circuit (ASIC) or a field programmable gate array (FPGA). Any of the CPU, the MPU, the GPU, the ASIC, and the FPGA can be regarded as the controller.

### <2-3. Configuration of base station>

Next, a configuration of the base station 20 will be described.

The base station 20 is a wireless communication apparatus that performs wireless communication with the terminal device 40. The base station 20 may be configured to wirelessly communicate with the terminal device 40 via the relay station 30, or may be configured to directly wirelessly communicate with the terminal device 40.

The base station 20 is one type of communication apparatus. The base station 20 is, for example, a device corresponding to a radio base station (e.g., base station, Node B, eNB, and gNB) or a radio access point. The base station 20 may be a wireless relay station. Furthermore, the base station 20 may be an optical extension device called a remote radio head (RRH) or a radio unit (RU). Furthermore, the base station 20 may be a receiving station such as a field pickup unit (FPU). Furthermore, the base station 20 may be an integrated access and backhaul (IAB) donor node or an IAB relay node that provides a radio access line and a radio backhaul line by time division multiplexing, frequency division multiplexing, or space division multiplexing.

Note that the radio access technology used by the base station 20 may be the cellular communication technology or the wireless LAN technology. Obviously, the radio access technology used by the base station 20 is not limited thereto, and may be other radio access technologies. For example, the radio access technology used by the base station 20 may be a low power wide area (LPWA) communication technology. In addition, the wireless communication used by the base station 20 may be wireless communication using millimeter waves. Furthermore, the wireless communication used by the base station 20 may be wireless communication using radio waves or wireless communication (optical) using infrared rays or visible light.

The base station 20 may be capable of non-orthogonal multiple access (NOMA) communication with the terminal device 40. Here, the NOMA communication is communication using a non-orthogonal resource (transmission, reception, or both). Note that the base station 20 may be able to perform the NOMA communication with another base station 20.

Note that the base stations 20 may be capable of communicating with each other via a base station-core network interface (e.g., S1 Interface). This interface may be either wired or wireless. Furthermore, the base stations may be capable of communicating with each other via an inter-base station interface (e.g., X2 Interface and S1 Interface). This interface may be either wired or wireless.

Note that the base stations 20 may be capable of communicating with each other via a base station-core network interface (e.g., NG Interface and S1 Interface). This interface may be either wired or wireless. Furthermore, the base stations may be capable of communicating with each other via an inter-base station interface (e.g., Xn Interface and X2 Interface). This interface may be either wired or wireless.

Note that the concept of the base station includes not only a donor base station but also a relay base station (also referred to as a relay station). For example, the relay base station may be any one of RF repeater, smart repeater, and intelligent surface. In addition, the concept of the base station includes not only a structure having a function of the base station but also an apparatus installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of the structure includes not only a building but also a non-building structure such as a tunnel, a bridge, a dam, a wall, or an iron pillar, and equipment such as a crane, a gate, or a windmill. In addition, the concept of the structure includes not only a structure on land (on the ground in a narrow sense) or underground, but also a structure on water such as a platform or a megafloat, and a structure under water such as a marine observation facility. The base station can be rephrased as an information processor.

The base station 20 may be the donor station or the relay station. Furthermore, the base station 20 may be a fixed station or a mobile station. The mobile station is a wireless communication apparatus (e.g., base station) configured to be movable. In this case, the base station 20 may be a device installed in the mobile body or may be the mobile body itself. For example, the relay station having mobility can be regarded as the base station 20 as the mobile station. In addition, a device that is originally a device having the mobility and has a function of the base station (at least a part of the function of the base station), such as a vehicle, an unmanned aerial vehicle (UAV) as typified by a drone, or a smartphone, also corresponds to the base station 20 as a mobile station.

Here, the mobile body may be the mobile terminal such as a smartphone or a mobile phone. In addition, the mobile body may be a mobile body that travels on land (ground in a narrow sense) (e.g., vehicle including an automobile, a bicycle, a bus, a truck, a motorcycle, a train, and a linear motor car) or a mobile body that travels underground (e.g., inside tunnel) (e.g., subway).

In addition, the mobile body may be a mobile body that travels on water (e.g., ship such as a passenger ship, a cargo ship, or a hovercraft) or a mobile body that moves under water (e.g., submersibles such as a submersible vessel, a submarine, and an unmanned submarine).

Note that the mobile body may be a mobile body (e.g., an aircraft such as an airplane, an airship, or a drone) that moves in the atmosphere.

Furthermore, the base station 20 may be a ground base station device (ground station) installed on the ground. For example, the base station 20 may be a base station installed in a structure on the ground, or may be a base station installed in a mobile body moving on the ground. More specifically, the base station 20 may be an antenna installed in a structure such as a building and a signal processing device connected to the antenna. Obviously, the base station 20 may be a structure or a mobile body itself. The "ground" in a broad sense includes not only land (ground in a narrow sense) but also underground, on water, and under water. Note that the base station 20 is not limited to the ground base station. For example, when the communication system 1 is a satellite communication system, the base station 20 may be an aircraft station. From the perspective of the satellite station, the aircraft station located on the earth is a ground station.

Note that the base station 20 is not limited to the ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device mounted on a space mobile body such as an artificial satellite, or may be the space mobile body itself. The space mobile body is a mobile body that moves outside the atmosphere. Examples of the space mobile body include artificial bodies such as an artificial satellite, spacecraft, space stations, and probe.

The satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Obviously, the satellite station may be a device mounted on the LEO satellite, the MEO satellite, the GEO satellite, or the HEO satellite.

The aircraft station is a wireless communication apparatus capable of floating in the atmosphere, such as an aircraft. The aircraft station may be a device mounted on an aircraft or the like, or may be the aircraft itself. Note that the concept of the aircraft includes not only a heavy aircraft such as an airplane and a glider but also a light aircraft such as a balloon and an airship. In addition, the concept of the aircraft includes not only heavy and light aircrafts but also a rotorcraft such as a helicopter and an autogyroscope. Note that the aircraft station (or the aircraft on which an aircraft station is mounted) may be an unmanned aerial vehicle such as a drone.

Note that the concept of the unmanned aerial vehicle also includes an unmanned aircraft system (UAS) and a tethered UAS. The concept of the unmanned aerial vehicle also includes lighter than air (LTA) UAS and heavier than air (HTA) UAS. Furthermore, the concept of unmanned aerial vehicles also includes high altitude UAS platforms (HAPs).

A coverage of the base station 20 may be large such as a macro cell to small such as a pico cell. It is apparent that a magnitude of the coverage of the base station 20 may be extremely small such as a femto cell. Further, the base station 20 may have a beamforming capability. In this case, the base station 20 may form a cell or a service area for each beam.

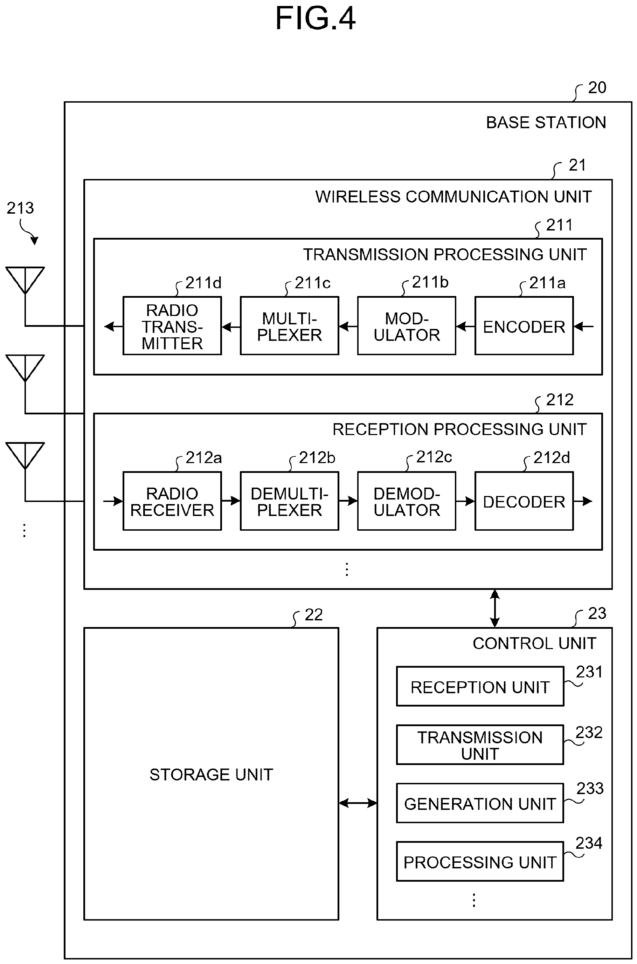

FIG. 4 is a diagram illustrating a configuration example of the base station 20 according to the embodiment of the present disclosure. The base station 20 includes a wireless communication unit 21, a storage unit 22, and a control unit 23. Note that the configuration illustrated in FIG. 4 is a functional configuration, and a hardware configuration may be different from the functional configuration. Furthermore, functions of the base station 20 may be implemented in a distributed manner in a plurality of physically separated configurations.

The wireless communication unit 21 is a signal processing unit for wirelessly communicating with other wireless communication apparatus (e.g., terminal device 40). The wireless communication unit 21 operates under the control of the control unit 23. The wireless communication unit 21 corresponds to one or a plurality of radio access methods. For example, the wireless communication unit 21 supports both NR and LTE. The wireless communication unit 21 may be compatible with W-CDMA or cdma2000 in addition to the NR or LTE. Furthermore, the wireless communication unit 21 may support an automatic retransmission technology such as hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. When the wireless communication unit 21 supports the plurality of radio access methods, each part of the wireless communication unit 21 can be configured individually for each of the radio access methods. For example, the transmission processing unit 211 and the reception processing unit 212 may be individually configured for the LTE and the NR. Furthermore, the antenna 213 may include a plurality of antenna elements (e.g., a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The transmission processing unit 211 performs transmission processing of downlink control information and downlink data. The transmission processing unit 211 encodes the downlink control information and the downlink data input from the control unit 23 using an encoding system such as block encoding, convolutional encoding, or turbo encoding. Here, the encoding may be performed by polar code encoding or low density parity check code (LDPC code) encoding. Then, the transmission processing unit 211 modulates coded bits by a predetermined modulation scheme such as BPSK, QPSK, 16QAM, 64QAM, or 256QAM. In this case, signal points on constellation do not necessarily have to be equidistant. The constellation may be a non-uniform constellation (NUC). The transmission processing unit 211 multiplexes a modulation symbol of each channel and a downlink reference signal, and arranges a multiplexed result in a predetermined resource element. Then, the transmission processing unit 211 performs various types of signal processing on a multiplexed signal. For example, the transmission processing unit 211 performs processing such as conversion into a frequency domain by fast Fourier transform, addition of a guard interval, generation of a baseband digital signal, conversion into an analog signal, quadrature modulation, up-conversion, removal of an extra frequency component, and power amplification. A signal generated by the transmission processing unit 211 is transmitted from the antenna 213.

The reception processing unit 212 processes an uplink signal received via the antenna 213. The reception processing unit 212 performs, with respect to the uplink signal, down-conversion, removal of an unnecessary frequency component, control of an amplification level, quadrature demodulation, conversion into a digital signal, removal of a guard interval (cyclic prefix), extraction of a frequency domain signal by fast Fourier transform, and the like. In this case, the reception processing unit 212 separates an uplink channel, such as a physical uplink shared channel (PUSCH) and a physical uplink control channel (PUCCH), and an uplink reference signal from a signal after the above processing is performed. The reception processing unit 212 demodulates a received signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 212 decodes encoded bits of a demodulated uplink channel. Decoded uplink data and uplink control information are output to the control unit 23.

The antenna 213 is an antenna device (antenna unit) that mutually converts a current and a radio wave. The antenna 213 may include one antenna element (e.g., one patch antenna) or may include a plurality of antenna elements (e.g., a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a wireless signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) at transmitting wireless signals. Then, the wireless communication unit 21 may control directivity of the wireless signal transmitted using the vertically polarized wave and the horizontally polarized wave. Furthermore, the wireless communication unit 21 may transmit and receive spatially multiplexed signals via a plurality of layers including the plurality of antenna elements.

The storage unit 22 is a storage device capable of reading and writing data, such as a DRAM, an SRAM, a flash memory, or a hard disk. The storage unit 22 functions as a storage means of the base station 20.

The control unit 23 is a controller that controls each part of the base station 20. The control unit 23 is realized by, for example, a processor such as a central processing unit (CPU) or a micro processing unit (MPU). For example, the control unit 23 is implemented by a processor executing various programs stored in the storage device inside the base station 20 using the random access memory (RAM) or the like as a work area. Note that the control unit 23 may be realized by an integrated circuit such as an application specific integrated circuit (ASIC) or a field programmable gate array (FPGA). Any of the CPU, the MPU, the ASIC, and the FPGA can be regarded as the controller. Furthermore, the control unit 23 may be realized by a graphics processing unit (GPU) in addition to or instead of the CPU.

The control unit 23 includes reception unit 231, a transmission unit 232, a generation unit 233, and a processing unit 234. Blocks (reception unit 231 to processing unit 234) configuring the control unit 23 are functional blocks indicating a function of the control unit 23. These functional blocks may be software blocks or hardware blocks. For example, each of the functional blocks described above may be one software module realized by software (microprogram), or may be one circuit block on a semiconductor chip (die). It is apparent that each functional block may be one processor or one integrated circuit. Note that the control unit 23 may be configured by a functional unit different from the above-described functional blocks. A configuration method of the functional blocks is arbitrary.

In some embodiments, the concept of a base station may consist of a collection of multiple physical or logical devices. For example, in this embodiment, the base station may be distinguished into a plurality of apparatuses such as a baseband unit (BBU) and a radio unit (RU). Then, the base station may be interpreted as an assembly of the plurality of apparatuses. In addition, the base station may be either or both of the BBU and the RU. The BBU and the RU may be connected by a predetermined interface (e.g., enhanced common public radio interface (eCPRI)). The RU may be rephrased as a remote radio unit (RRU) or a radio DoT (RD). Furthermore, the RU may correspond to a gNB distributed unit (gNB-DU) described later. Further, the BBU may correspond to a gNB central unit (gNB-CU) described later. Alternatively, the RU may be a wireless device connected to the gNB-DU described later. The gNB-CU, the gNB-DU, and the RU connected to the gNB-DU may be configured to conform to an open radio access network (O-RAN). Further, the RU may be a device integrally formed with the antenna. The antenna (e.g., antenna integrally formed with RU) included in the base station may adopt an advanced antenna system and support MIMO (e.g., FD-MIMO) or beamforming. Furthermore, the antenna included in the base station may include, for example, 64 transmission antenna ports and 64 reception antenna ports.

In addition, the antenna mounted on the RU may be an antenna panel including one or more antenna elements, and the RU may be mounted with one or more antenna panels. For example, the RU may be mounted with two antenna panels of a horizontally polarized antenna panel and a vertically polarized antenna panel, or two antenna panels of a clockwise circularly polarized antenna panel and a counterclockwise circularly polarized antenna panel. In addition, the RU may form and control an independent beam for each antenna panel.

Note that a plurality of base stations may be connected to each other. The one or more base stations may be included in a radio access network (RAN). In this case, the base station may be simply referred to as a RAN, a RAN node, an access network (AN), or an AN node. Note that the RAN in the LTE is sometimes referred to as an enhanced universal terrestrial RAN (EUTR_AN). In addition, the RAN in the NR may be referred to as NGR_AN. In addition, the RAN in the W-CDMA (UMTS) is sometimes referred to as UTRAN.

Note that an LTE base station may be referred to as an evolved node B (eNodeB) or an eNB. In this case, the EUTR_AN includes one or more eNodeBs (eNBs). Further, an NR base station may be referred to as a gNodeB or a gNB. In this case, the NGR_AN includes one or more gNBs. The EUTR_AN may include the gNB (en-gNB) connected to the core network (EPC) in an LTE communication system (EPS). Similarly, the NGR_AN may include an ng-eNB connected to a core network 5GC in a 5G communications system (5GS).

When the base station is the eNB, the gNB, or the like, the base station may be referred to as a 3GPP access. In addition, when the base station is the radio access point, the base station may be referred to as a non-3GPP access. Further, the base station may be an optical extension device called a remote radio head (RRH) or a radio unit (RU). Furthermore, in a case where the base station is the gNB, the base station may be a combination of the gNB-CU and the gNB-DU described above, or may be any one of the gNB-CU and the gNB-DU.

Here, the gNB-CU hosts a plurality of upper layers (e.g., RRC, SDAP, PDCP) in an access stratum for communication with the UE. On the other hand, the gNB-DU hosts a plurality of lower layers (e.g., RLC, MAC, PHY) in an access stratum. In other words, among messages/information to be described later, RRC signaling (semi-static notification) may be generated by the gNB-CU, while MAC CE and DCI (dynamic notification) may be generated by the gNB-DU. Alternatively, in the RRC configuration (semi-static notification), for example, some configurations such as IE: cellGroupConfig may be generated by the gNB-DU, and the remaining configurations may be generated by the gNB-CU. These configurations may be transmitted and received through an F1 interface described later.

Note that the base station may be configured to be able to communicate with another base station. For example, when a plurality of base stations is the eNBs or a combination of the eNB and the en-gNB, the base stations may be connected by an X2 interface. Furthermore, in a case where a plurality of base stations are the gNBs or a combination of the gn-eNB and the gNB, the devices may be connected by an Xn interface. Furthermore, in a case where a plurality of base stations is a combination of the gNB-CU and the gNB-DU, the devices may be connected by the above-described F1 interface. A message/information (e.g., RRC signaling, MAC control element (MAC CE), or DCI) to be described later may be transmitted between a plurality of base stations, for example, via the X2 interface, the Xn interface, or the F1 interface.

The cell provided by the base station is referred to as, for example, a serving cell. The serving cell may include a primary cell (PCell) and a secondary cell (SCell). When dual connectivity is configured for the UE (e.g., terminal device 40), the PCell provided by a master node (MN) and zero or one or more SCells may be referred to as a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity.

Further, the serving cell may include a primary secondary cell (PSCell) or primary SCG cell. In other words, when the dual connectivity is set to the UE, the PSCell provided by the secondary node (SN) and zero and the sCell(s) or one or more SCells are referred to as a secondary cell group (SCG). Unless specially configured (e.g., PUCCH on SCell), a physical uplink control channel (PUCCH) is transmitted in the PCell and the PSCell, but is not transmitted in the SCell. In addition, a radio link failure is also detected in the PCell and the PSCell, but is not detected in the SCell (may not be detected). As described above, since the PCell and the PSCell have a special role in the serving cell, they are also referred to as a special cell (SpCell).

In one cell, one downlink component carrier and one uplink component carrier may be associated. Further, a system bandwidth corresponding to one cell may be divided into a plurality of bandwidth parts (BWP). In this case, one or more BWP may be set to the UE, and the UE may use one BWP as an active BWP. In addition, radio resources that can be used by the terminal device 40 (e.g., frequency bandwidth, numerology (subcarrier spacing), and slot configuration) may be different for each cell, each component carrier, or each BWP.

### <2-4. Configuration of relay station>

Next, a configuration of the relay station 30 will be described.

The relay station 30 is a device serving as a relay station of the base station. The relay station 30 is one type of base stations. The relay station 30 is one type of information processor. The relay station can be rephrased as a relay base station. Furthermore, the relay station 30 may be a device called a repeater (e. g., RF repeater, smart repeater, and intelligent surface).

The relay station 30 can perform wireless communication such as NOMA communication with the terminal device 40. The relay station 30 relays communication between the base station 20 and the terminal device 40. Note that the relay station 30 may be configured to be able to wirelessly communicate with another relay station 30 and the base station 20. The relay station 30 may be a ground station device or a non-ground station device. The relay station 30 configures a radio access network RAN together with the base station 20.

Note that the relay station of the present embodiment may be a fixed device, a movable device, or a floating device. In addition, the size of the coverage of the relay station of the present embodiment is not limited to a specific size. For example, the cell covered by the relay station may be a macro cell, a micro cell, or a small cell.

In addition, the relay station of the present embodiment is not limited to a mounted device as long as the function of relay is satisfied. For example, the relay station may be mounted on a terminal device such as a smartphone, may be mounted on an automobile, a train or a human-powered vehicle, may be mounted on a balloon, an airplane, or a drone, or may be mounted on a home appliance such as a television, a game machine, an air conditioner, a refrigerator, or a lighting fixture.

In addition, the configuration of the relay station 30 may be similar to the configuration of the base station 20 described above. For example, similarly to the base station 20 described above, the relay station 30 may be a device installed in the mobile body or may be the mobile body itself. Here, the mobile body may be a mobile terminal such as a smartphone or a mobile phone. In addition, the mobile body may be a mobile body that moves on land (on the ground in a narrow sense) or may be a mobile body that moves in the ground. Obviously, the mobile body may be a mobile body that moves on water or may be a mobile body that moves under water. In addition, the mobile body may be a mobile body that moves inside the atmosphere or may be a mobile body that moves outside the atmosphere. Furthermore, the base station 20 may be a ground station device or a non-ground station device. In this case, the relay station 30 may be an aircraft station or a satellite station.

Furthermore, the magnitude of the coverage of the relay station 30 may be large such as a macro cell or small such as a pico cell, similarly to the base station 20. It is apparent that a magnitude of the coverage of the relay station 30 may be extremely small such as a femto cell. Further, the relay station 30 may have a beamforming capability. In this case, the relay station 30 may form a cell or a service area for each beam.

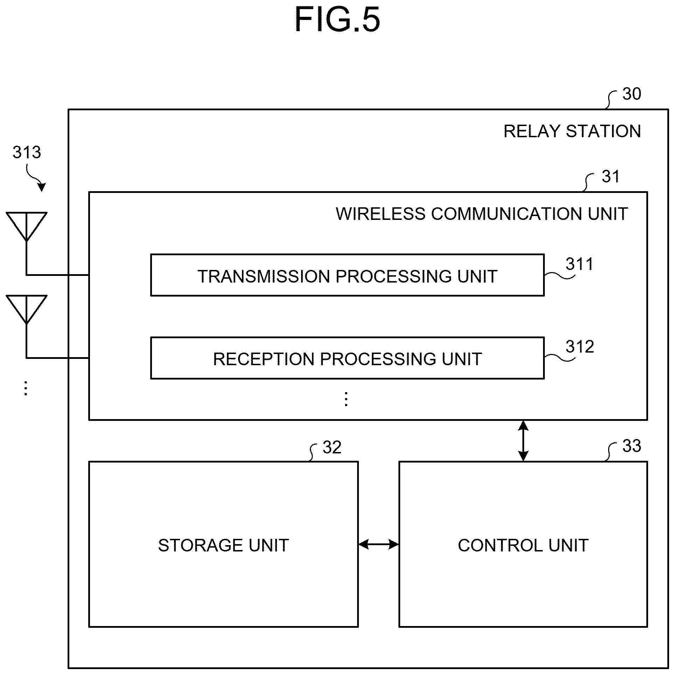

FIG. 5 is a diagram illustrating a configuration example of the relay station 30 according to the embodiment of the present disclosure. The relay station 30 includes a wireless communication unit 31, a storage unit 32, and a control unit 33. Note that the configuration illustrated in FIG. 5 is a functional configuration, and a hardware configuration may be different from the functional configuration. Furthermore, functions of the relay station 30 may be implemented in a distributed manner in a plurality of physically separated structures.

The wireless communication unit 31 is a wireless communication interface that wirelessly communicates with other wireless communication apparatuses (e.g., base station 20, terminal device 40, and another relay station 30). The wireless communication unit 31 supports one or a plurality of radio access methods. For example, the wireless communication unit 31 supports both NR and LTE. The wireless communication unit 31 may be compatible with the W-CDMA or cdma2000 in addition to the NR or LTE. The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. When the wireless communication unit 31 supports a plurality of radio access methods, each part of the wireless communication unit 31 can be configured individually for each radio access method. For example, the transmission processing unit 311 and the reception processing unit 312 may be individually configured for the LTE and the NR. Configurations of the transmission processing unit 311, the reception processing unit 312, and the antenna 313 are similar to the configurations of the transmission processing unit 211, the reception processing unit 212, and the antenna 213 described above. Note that the wireless communication unit 31 may be configured to be beamformable similarly to the wireless communication unit 21.

The storage unit 32 is a storage device capable of reading and writing data, such as the DRAM, the SRAM, the flash memory, or the hard disk. The storage unit 32 functions as a storage means of the relay station 30.

The control unit 33 is a controller that controls each part of the relay station 30. The control unit 33 is realized by, for example, a processor such as the CPU, MPU, or GPU. For example, the control unit 33 is realized by a processor executing various programs stored in the storage device inside the relay station 30 using the RAM or the like as a work area. Note that the control unit 33 may be realized by an integrated circuit such as the ASIC or the FPGA. Any of the CPU, the MPU, the GPU, the ASIC, and the FPGA can be regarded as the controller. The operation of the control unit 33 may be the same as the operation of each block (reception unit 231 to processing unit 234) of the control unit 23 of the base station 20.

Note that the relay station 30 may be an IAB relay node. The relay station 30 operates as an IAB-mobile termination (MT) for an IAB donor node that provides backhaul, and operates as an IAB-distributed unit (DU) for the terminal device 40 that provides an access. The IAB donor node may be, for example, the base station 20, and operates as an IAB-central unit (CU).

### <2-5. Configuration of terminal device>

Next, a configuration of the terminal device 40 will be described.

The terminal device 40 is a wireless communication apparatus that wirelessly communicates with other communication apparatuses such as the base station 20 and the relay station 30. For example, the terminal device 40 may be a mobile phone, a smart device (smartphone or tablet), a personal digital assistant (PDA), or a personal computer. Furthermore, the terminal device 40 may be a device such as a business-use camera provided with a communication function, or may be a motorcycle, a moving relay vehicle, or the like on which a communication device such as a field pickup unit (FPU) is mounted. Furthermore, the terminal device 40 may be a machine to machine (M2M) device or an Internet of things (IoT) device.

Note that the terminal device 40 may be capable of performing NOMA communication with the base station 20. Furthermore, the terminal device 40 may be capable of using an automatic retransmission technology such as HARQ when communicating with the base station 20. Further, the terminal device 40 may be capable of performing sidelink communication with another terminal device 40. The terminal device 40 may also be capable of using an automatic retransmission technology such as HARQ when performing the sidelink communication. Note that the terminal device 40 may also be capable of NOMA communication in communication (sidelink) with other terminal devices 40. Furthermore, the terminal device 40 may be capable of performing the LPWA communication with another communication apparatus (e.g., base station 20 and another terminal device 40). Furthermore, wireless communication used by the terminal device 40 may be wireless communication using millimeter waves. Note that the wireless communication (including sidelink communication) used by the terminal device 40 may be wireless communication using radio waves or wireless communication (optical) using infrared rays or visible light.

Furthermore, the terminal device 40 may be a mobile device. The mobile device is a mobile wireless communication apparatus. In this case, the terminal device 40 may be a wireless communication apparatus installed in a mobile body or may be the mobile body itself. For example, the terminal device 40 may be a vehicle that moves on a road, such as an automobile, a bus, a truck, or a motorcycle, or a wireless communication apparatus mounted on the vehicle. Note that the mobile body may be a mobile terminal, or may be the mobile body that travels on land (on the ground in a narrow sense), underground, on water, or under water. Furthermore, the mobile body may be a mobile body that travels in the atmosphere, such as a drone or a helicopter, or may be a mobile body that travels outside the atmosphere such as an artificial satellite.

The terminal device 40 may be simultaneously connected to a plurality of base stations or a plurality of cells to perform communication. For example, when one base station supports a communication area via a plurality of cells (e.g., pCell and sCell), it is possible to bundle the plurality of cells and communicate between the base station 20 and the terminal device 40 by a carrier aggregation (CA) technology, a dual connectivity (DC) technology, or a multi-connectivity (MC) technology. Alternatively, the terminal device 40 and the plurality of base stations 20 can communicate with each other by a coordinated multipoint transmission and reception (CoMP) technology via cells of different base stations 20.

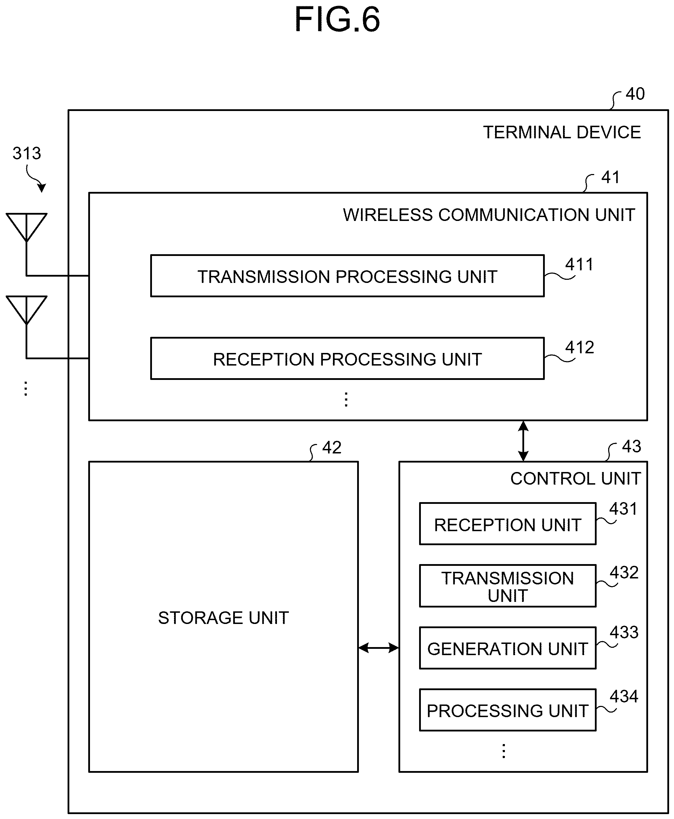

FIG. 6 is a diagram illustrating a configuration example of the terminal device 40 according to the embodiment of the present disclosure. The terminal device 40 includes a wireless communication unit 41, a storage unit 42, and a control unit 43. Note that the configuration illustrated in FIG. 6 is a functional configuration, and a hardware configuration may be different from the functional configuration. Furthermore, functions of the terminal device 40 may be implemented in a distributed manner in a plurality of physically separated configurations.

The wireless communication unit 41 is a signal processing unit for wirelessly communicating with other wireless communication apparatuses (e.g., base station 20, relay station 30, and another terminal device 40). The wireless communication unit 41 operates under the control of the control unit 43. The wireless communication unit 41 includes a transmission processing unit 411, a reception processing unit 412, and an antenna 413. Configurations of the wireless communication unit 41, the transmission processing unit 411, the reception processing unit 412, and the antenna 413 may be similar to those of the wireless communication unit 21, the transmission processing unit 211, the reception processing unit 212, and the antenna 213 of the base station 20. Further, the wireless communication unit 41 may be configured to be beamformable similarly to the wireless communication unit 21. Further, similarly to the wireless communication unit 21, the wireless communication unit 41 may be configured to be capable of transmitting and receiving spatially multiplexed signals.

The storage unit 42 is a storage device capable of reading and writing data, such as a DRAM, an SRAM, a flash memory, or a hard disk. The storage unit 42 functions as a storage means of the terminal device 40.

The control unit 43 is a controller that controls each part of the terminal device 40. The control unit 43 is realized by, for example, a processor such as the CPU or the MPU. For example, the control unit 43 is realized by a processor executing various programs stored in a storage device inside the terminal device 40 using the RAM or the like as a work area. Note that the control unit 43 may be realized by an integrated circuit such as the ASIC or the FPGA. Any of the CPU, the MPU, the ASIC, and the FPGA can be regarded as the controller. Furthermore, the control unit 43 may be realized by the GPU in addition to or instead of the CPU.

The control unit 43 includes a reception unit 431, a transmission unit 432, a generation unit 433, and a processing unit 434. Each block (reception unit 431 to processing unit 434) configuring the control unit 43 is a functional block indicating a function of the control unit 43. These functional blocks may be software blocks or hardware blocks. For example, each of the functional blocks described above may be one software module realized by software (microprogram), or may be one circuit block on a semiconductor chip (die). It is apparent that each functional block may be one processor or one integrated circuit. Note that the control unit 43 may be configured by a functional unit different from the above-described functional blocks. A configuration method of the functional blocks is arbitrary.

### <<3. Network architecture>>

The configuration of the communication system 1 has been described above. Next, a network architecture applicable to the communication system 1 of the present embodiment will be described.

### <3-1. Configuration example of network architecture>

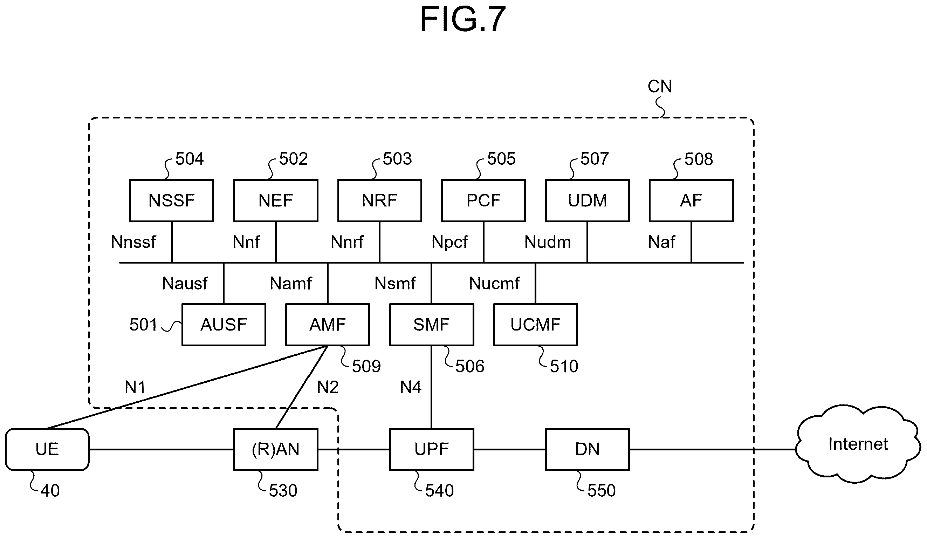

First, an architecture of the fifth generation mobile communication system (5G) will be described as an example of the core network CN of the communication system 1. FIG. 7 is a diagram illustrating an example of 5G architecture. The 5G core network CN is also referred to as a 5G core/next generation core (5GC/NGC). Hereinafter, the 5G core network CN is also referred to as the 5GC/NGC. The core network CN is connected to user equipment (UE) 40 via a (R) AN 530. The UE 40 is, for example, the terminal device 40.

The (R) AN 530 has a function of enabling connection to a radio access network (RAN) and connection to an access network (AN) other than the RAN. The (R) AN 530 includes a base station called the gNB or the ng-eNB.

The core network CN mainly performs connection permission and session management when the UE 40 is connected to the network. The core network CN may include one or a plurality of management devices 10. The core network CN includes a user plane function group and a control plane function group.

The user plane function group includes a user plane function (UPF) 540 and a data network (DN) 550. The UPF 540 has a function of user plane processing. The UPF 540 includes a routing/forwarding function of data handled in a user plane. A DN 550 has a function of providing an entity, such as a mobile network operator (MNO), that provides a connection to an operator's own service, providing an Internet connection, or providing a connection to a third party service. As described above, the user plane function group plays a role of a gateway serving as a boundary between the core network CN and the Internet.

The control plane function group includes an authentication server function (AUSF) 501, a network exposure function (NEF) 502, a network repository function (NRF) 503, a network slice selection function (NSSF) 504, a policy control function (PCF) 505, a session management function (SMF) 506, a unified data management (UDM) 507, an application function (AF) 508, an access and mobility management function (AMF) 509, and a UE radio capability management function (UCMF) 510. The UDM 507 includes a unified data repository (UDR) that holds and manages subscriber information, and a front end (FE) unit that processes the subscriber information.

The AUSF 501 has an authentication function. The NEF 502 has a function of providing network function capabilities and events to a third party, the AF 508, and an edge computing function. The NRF 503 has a function of finding a network function and holding a profile of the network function. The NSSF 504 has a function related to selection of a network slice. The PCF 505 has a function of policy control. The SMF 506 has functions such as session management and IP assignment and management of the UE 40. The UDM 507 has functions of generating 3GPP AKA authentication information and processing a user ID. The AF 508 has a function of providing a service by interacting with each network function (NF) of the core network. The AMF 509 has functions such as registration processing, connection management, and mobility management of the UE 40.

The UCMF 510 holds UE radio capability information corresponding to all UE radio capability IDs in the PLMN, and is responsible for assigning each PLMN-assigned UE radio capability ID.

Here, Namf is a service-based interface provided by the AMF 509, Nsmf is a service-based interface provided by the SMF 506, Nnef is a service-based interface provided by the NRF 503, Npcf is a service-based interface provided by the PCF 505, Nudm is a service-based interface provided by the UDM 507, Naf is a service-based interface provided by the AF 508, Nnrf is a service-based interface provided by the NRF 503, Nnssf is a service-based interface provided by the NSSF 504, and Nausf is a service-based interface provided by the AUSF 5010, and each NF exchanges information with another NF via each service-based interface.

In addition, N1 is a reference point between the UE 40 and the AMF 509, N2 is a reference point between the (R) AN 530 and the AMF 509, N4 is a reference point between the SMF 506 and the UPF 540, and information is exchanged between the NFs.

In order for the UE 40 to be permitted to provide a service via the core network CN, the UE 40 needs to be registered with the core network CN. The UE 40 selects a PLMN to which the core network CN belongs and performs a registration procedure.

### <3-2. Registration procedure>

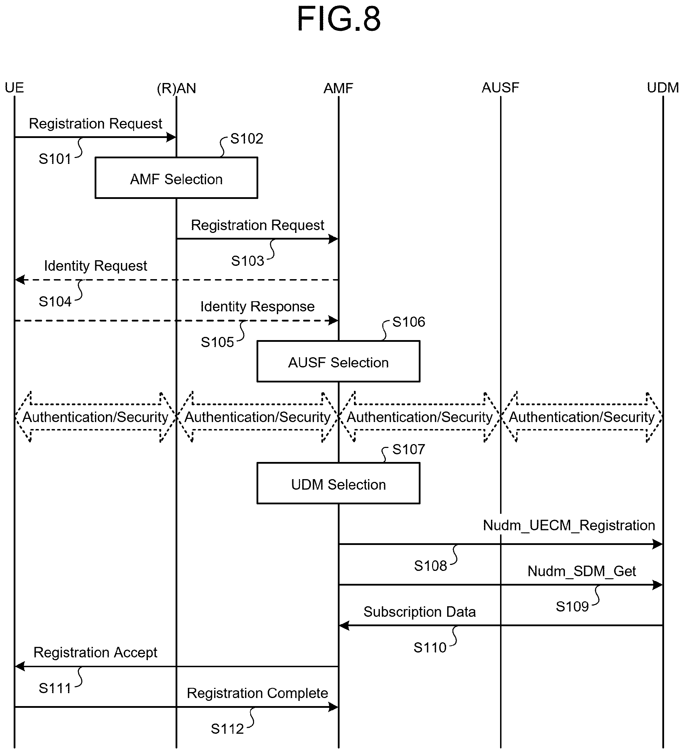

FIG. 8 is a sequence diagram illustrating an example of registration procedure. Hereinafter, the registration procedure will be described with reference to FIG. 8.

The UE 40 that is not registered in the core network CN transmits a registration request message to the (R) AN 530 in order to perform initial registration (Step S101). Here, the state not registered in the core network CN is, for example, a registration management deregistered (RM-DEREGISTERED) state. Note that the UE 40 needs to include the UE identity in a registration request message and transmit the registration request message.

The UE identity is a 5G-GUTI mapped from an EPS GUTI when the UE identity has a valid EPS GUTI. Here, an evolved packet system (EPS) is long term evolution (LTE) of a 4G system. A globally unique temporary identifier (GUTI) of the EPS is a temporary ID used to identify the UE in the EPS, from a viewpoint of security, instead of an ID uniquely assigned to each UE such as an international mobile subscriber identity (IMSI) or an international mobile equipment identity (IMEI).

Alternatively, the UE identity is a PLMN-specific 5G-GUTI, if available, assigned by the PLMN that the UE attempts to register with.

Alternatively, the UE identity is a PLMN-specific 5G-GUTI, if available, assigned by a PLMM treated as an equivalent PLMN to the PLMN that the UE attempts to register with.

Alternatively, the UE identity is a PLMN-specific 5G-GUTI, if available, assigned by any PLMN.

Otherwise, the UE 40 needs to include subscription concealed identifier (SUCI) in the registration request message. Here, the SUCI is an ID obtained by encrypting a subscription permanent identifier (SUPI) that is an ID uniquely assigned to each UE.

In addition, the registration request message may include a UE radio capability ID. The UE radio capability ID is an ID for identifying UE radio capability information, and can identify, as the UE radio capability information, compatibility with switching of the signal processing system described above and a type or a set of signal processing systems that can be supported at the time of switching. The UE radio capability information may include information indicating whether or not the UE 40 can switch the signal processing system.

When the UE radio capability information is changed, a UE radio capability update is included in the registration request message, and the registration procedure is performed as a mobility registration update request. In the case of connection management connected (CM-CONNECTED), the UE 40 first transitions to CM-IDLE and then performs the registration procedure for the UE radio capability update.

When receiving the registration request message from the UE 40, the (R) AN 530 executes AMF selection (Step S102). When 5G S-Temporary mobile subscription identifier (5G-S-TMSI) or globally unique AMF Identifier (GUAMI) is not included, or the 5G-S-TMSI or GUAMI does not indicate a valid AMF 509, the AMF 509 is selected based on a radio access technology ((R) AT) and, if available, requested network slice selection assist information (NSSAI).

When the (R) AN 530 is a next generation RAN (NG-R_AN), a registration request including the selected PLMN ID and UE radio capability ID is forwarded to the AMF 509 (Step S103).

The AMF 509 holds the UE radio capability information of the UE 40 based on the UE radio capability ID received. In other words, the AMF 509 holds information related to compatibility with switching of the signal processing system of the UE 40, a type or set of the signal processing system that can be supported at the time of switching.

Here, when the NG-RAN does not support UE radio capability signaling optimization (RACS) or the AMF 509 has the UE radio capability ID but does not have the UE radio capability information, the AMF 509 acquires corresponding UE radio capability information from the UCMF 510 by using Nucmf_UECapabilityManagement_Resolve. When the NG-RAN needs to acquire the UE radio capability information corresponding to the UE radio capability ID, the NG-RAN uses N2 signaling to request the AMF 509 for the UE radio capability information.

When the UE 40 has not provided the SUCI to the AMF 509, the AMF 509 starts identity request processing and sends an identity request message to the UE 40 to request the SUCI (Step S104).

When receiving the identity request message, the UE 40 responds with an identity response message including the SUCI (Step S105). Here, the UE 40 can acquire the SUCI by using a public key of the HPLMN.

The AMF 509 executes the AUSF selection based on the SUPI or the SUCI and starts authentication of the UE 40 (Step S106).

When the AUSF 501 receives a request for authentication from the AMF 509, the AUSF 501 needs to perform authentication of the UE 40. The AUSF 501 selects the UDM 507 as an authentication process and acquires authentication data from the UDM 507. When the UE 40 is authenticated, the AUSF 501 provides security information to the AMF 509.

When the authentication is successful in the AMF 509, the AMF 509 starts NG application protocol (NGAP) to provide security context to the (R) AN 530.

The (R) AN 530 holds the security context and returns a response to the AMF 509. The (R) AN 530 thereafter uses this security context to protect messages exchanged with the UE 40.

The AMF 509 performs UDM selection based on the SUPI, and selects the UDM 507 (Step S107). The AMF 509 transmits Nudm_UECM_Registration to the UDM 507 (Step S108). As a result, the AMF 509 is registered in the UDM 507.

When the AMF 509 does not have subscription data of the UE 40, the AMF 509 transmits Nudm_SDM_Get to the UDM 507 (Step S109). In response to the transmission, the UDM 507 transmits subscription data such as access and mobility subscription data and SMF selection subscription data to the AMF 509 (Step S110) .

The AMF 509 acquires the access and mobility subscription data from the UDM 507, and then generates a UE context. The access and mobility subscription data includes information indicating whether or not NSSAI may be included in plain text in RRC connection establishment in 3GPP access.

Thereafter, the AMF 509 transmits a registration acceptance (registration accept) 411 to the UE 40 (Step S111). A registration acceptance message includes the 5G-GUTI and registration area information. In addition, the registration acceptance message may include a PLMN-assigned UE radio capability ID or a PLMN-assigned UE radio capability ID deletion.

The network (PLMN) may use this PLMN-assigned UE radio capability ID to configure a UE radio capability ID for the UE 40. For example, the network can notify the UE 40 of activation of the function of switching the signal processing system, or the type or set of the signal processing system to be used.

The AMF 509 may determine the PLMN-assigned UE radio capability ID based on the UE radio capability information received from the UE 40.

Note that the UE 40 that has received the PLMN-assigned UE radio capability ID deletion needs to delete the PLMN-assigned UE radio capability ID. For example, the function of switching the signal processing system set from the network is deactivated, or the information related to the type or set of the signal processing system to be used is deleted.

In addition, the AMF 509 may provide a list of equivalent PLMNs to the UE 40 registered in the PLMN, but the AMF 509 may not provide a list of equivalent PLMNs to the UE 40 registered in a stand-alone NPN (SNPN).

The UE 40 transmits a registration complete message to the AMF 509 to notify that a new 5G-GUTI is assigned (Step S112).

According to the above processing, the terminal device 40, which is the UE 40, becomes a registration state (RM-REGISTERED state) with respect to the core network CN that is the network belonging to the PLMN.

Note that the AMF 509 can assign the PLMN-assigned UE radio capability ID to the UE 40 via a UE configuration update command message in a UE configuration update process, in addition to assigning the PLMN-assigned UE radio capability ID to the UE 40 via the registration acceptance message in the registration procedure.

In addition, since the type of compatible signal processing system may be different for each cell, the (R) AN 530 may provide information regarding compatibility with switching of the signal processing system, and the type or set of the signal processing system which can be supported at the time of switching via system information for each cell. For example, information related to the signal processing system used at the time of initial access is notified via a master information block (MIB).
Furthermore, dynamic switching of the signal processing system is controlled via a system information block (SIB).

The (R) AN 530 may control switching of the signal processing system for each UE 40. For example, the (R) AN 530 controls switching of the signal processing system for each of the UEs 40 via radio resource control (RRC). The (R) AN 530 notifies the UE 40 of RRC_CONNECTED of system information including information necessary for dynamic switching of the signal processing system or UE capability information elements by using dedicated signaling such as an RRC reconfiguration message. Here, the information necessary for the dynamic switching of the signal processing system may include information related to compatibility with the switching of the signal processing system, the type or set of signal processing systems that can be supported at the time of switching, and information instructing the dynamic switching of the signal processing system.

### <<4. Signal processing of the present embodiment>>

The network architecture applicable to the communication system 1 of the present embodiment has been described above, and signal processing of the present embodiment will be described below.

### <4-1. Outline of processing>

First, an outline of signal processing of the present embodiment will be described.

The signal processing of the present embodiment is modulation processing. The modulation processing of the present embodiment is divided into the following (1) to (4) .

### (1) Generation of transmission bit sequence

The communication apparatus (base station 20 or terminal device 40) generates the transmission bit sequence. As described above, the transmission bit sequence is divided into the system bit sequence part and the parity bit sequence part.

### (2) Determination of transmission resource

The communications apparatus (base station 20 or terminal device 40) determines a transmission resource used for data transmission. The transmission resource is, for example, a resource block or a resource element.

### (3) Mapping of transmission bit sequence to complex signal point

The communication apparatus (base station 20 or terminal device 40) maps the transmission bit sequence to the complex signal point based on a predetermined rule. For example, the communication apparatus generates, based on the predetermined rule, at least one of a complex signal point to which only a system bit sequence is mapped, a complex signal point to which only a parity bit sequence is mapped, and a complex signal point on which the system bit sequence and the parity bit sequence are mixedly mapped.

### (4) Mapping of complex signal point to transmission resource

The communication apparatus (base station 20 or terminal device 40) maps the complex signal point generated in (3) to the transmission resource determined in (2). At this time, the communication apparatus maps the complex signal point to the transmission resource determined in (2) based on a predetermined condition regarding the channel state. Note that the communication apparatus may switch a mapping means. Information on the mapping means is notified from the base station 20 to the terminal device 40.

The outline of the signal processing of the present embodiment has been described above, and the above (1) to (4) will be described in detail below. After the description of (1) to (4), (5) Sequence example and (6) Application example will be described.

### <4-2. Generation of transmission bit sequence>

First, generation of the transmission bit sequence will be described.

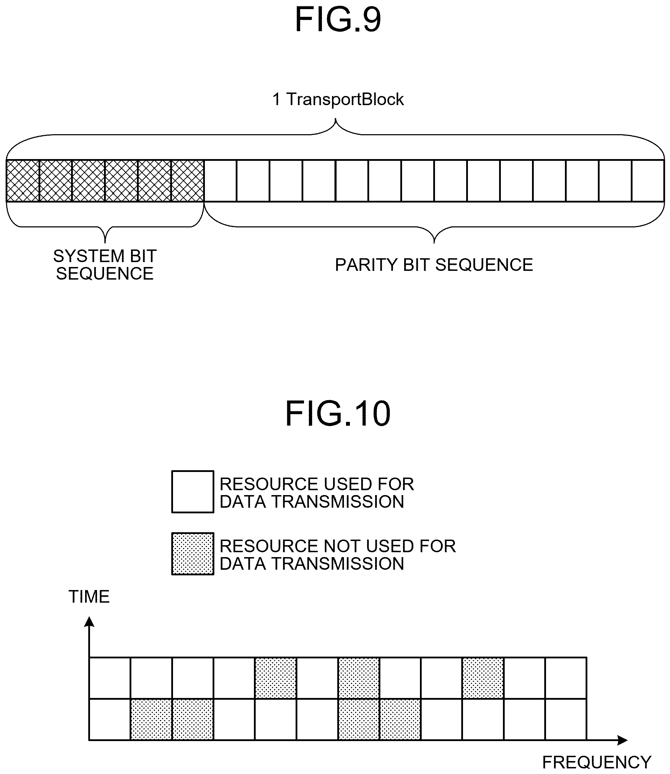

The communication apparatus (base station 20 or terminal device 40) generates the transmission bit sequence. FIG. 9 is a diagram illustrating a configuration example of the transmission bit sequence. In the example in FIG. 9, the transmission bit sequence of one transport block is illustrated. The transmission bit sequence is divided into the system bit sequence part and the parity bit sequence part. As described above, the system bit sequence part is a portion of a bit string of data desired to be transmitted to a transmission destination, such as user data. Furthermore, the parity bit sequence part is a portion of a redundant bit string added to the system bit sequence part for error detection or error correction.

Note that the communication apparatus may arrange the system bit sequence part and the parity bit sequence part in order from the top as illustrated in FIG. 9. Further, the communication apparatus may arrange the system bit sequence part and the parity bit sequence part in any order. For example, the communication apparatus may make the system bit sequence part and the parity bit sequence part in random order by applying interleaving.

Further, the communication apparatus may use the transmission bit sequence obtained by repeating the system bit sequence part and the parity bit sequence part a plurality of times by applying repetitive transmission.

Further, the communication apparatus may adjust the number of transmittable bits as the transmission bit sequence. The communication apparatus may determine the number of transmittable bits based on the modulation scheme to be applied and a transmission resource size. Adjustment to the number of transmittable bits may be realized, for example, by applying rate matching.

### <4-3. Determination of transmission resource>

Next, determination of transmission resource will be described.

The communications apparatus (base station 20 or terminal device 40) determines a transmission resource used for data transmission. FIG. 10 is a diagram illustrating the transmission resource determined by the communication apparatus. The transmission resource is, for example, a resource block or a resource element. The base station 20 may arbitrarily determine the transmission resource and notify the terminal device 40 of the determination (implementation dependent). The transmission resource may also be determined according to a predetermined condition. The predetermined condition may be the same as the "predetermined condition" described in <4-5> later.

### <4-4. Mapping of transmission bit sequence to complex signal point>

Next, mapping of the transmission bit sequence to the complex signal point will be described.

### <4-4-1. Modulation scheme>

The communication apparatus (base station 20 or terminal device 40) maps the transmission bit sequence generated in above-described <4-2> to the complex signal point. As the modulation scheme, BPSK, QPSK, 8PSK, 16QAM, 64QAM, 256QAM, 1024QAM, 2048QAM, and the like are conceived, but the modulation scheme may be other than the above. For example, the communication apparatus can also use non uniform constellation (NUC) and index modulation (IM) as the modulation schemes. In addition, the complex signal point may be a combination of a plurality of modulation schemes. For example, QPSK and 16QAM are combined. Although QPSK will be described below as an example, the modulation scheme used by the communication apparatus of the present embodiment is not limited to QPSK.

### <4-4-2. Mapping to one complex signal point>

The communication apparatus maps one or a plurality of bits of the transmission bit sequence to one complex signal point by using at least one of mapping means described in the following (1) to (3). Hereinafter, these three mapping means will be described with reference to the drawings.

### (1) First mapping means (system bit sequence only)

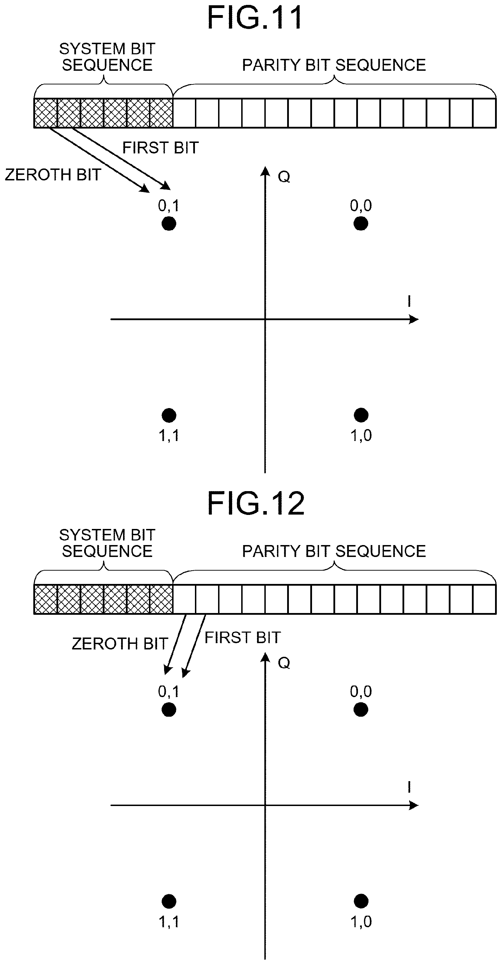

In the first mapping means, the communication apparatus maps only the bits of the system bit sequence part in the transmission bit sequence to one complex signal point. FIG. 11 is a diagram illustrating mapping (first mapping means) of the transmission bit sequence to one complex signal point. In a case where only the bits of the system bit sequence part are mapped to one complex signal point, the communication apparatus allocates the bits of the system bit sequence part to all allocatable bits. In the example in FIG. 11, one complex signal point includes two bits, and the communication apparatus allocates the bits of the system bit sequence part to all of the two bits.

### (2) Second mapping means (parity bit sequence only)

In the second mapping means, the communication apparatus maps only the bits of the parity bit sequence part in the transmission bit sequence to one complex signal point. FIG. 12 is a diagram illustrating mapping (second mapping means) of the transmission bit sequence to one complex signal point. In a case where only the bits of the parity bit sequence part are mapped to one complex signal point, the communication apparatus allocates the bits of the parity bit sequence part to all the allocatable bits. In the example in FIG. 12, one complex signal point includes two bits, and the communication apparatus allocates the bits of the parity bit sequence part to all of the two bits.

### (3) Third mapping means (mixture of system bit sequence and parity bit sequence)

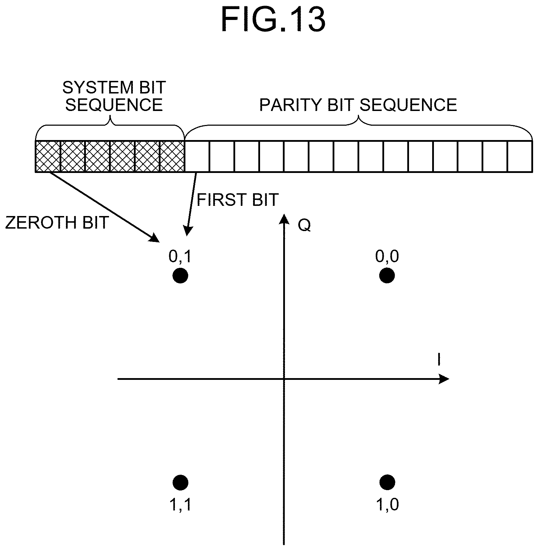

In the third mapping means, the communication apparatus maps the bits of the system bit sequence part and the bits of the parity bit sequence part to one complex signal point. FIG. 13 is a diagram illustrating mapping (third mapping means) of the transmission bit sequence to one complex signal point. In a case where the bits of the system bit sequence part and the bits of the parity bit sequence part are mapped to one complex signal point, the communication apparatus allocates a part of the allocatable bits to the bits of the system bit sequence part, and allocates the remaining bits to the bits of the parity bit sequence part. In the example in FIG. 13, one complex signal point includes two bits, and the communication apparatus allocates the bit of the system bit sequence part to one bit among the two bits, and allocates the bit of the parity bit sequence part to the remaining one bit.

In the following description, the complex signal point (system bit sequence only) obtained by the first mapping means may be referred to as a first type complex signal point, a complex signal point (parity bit sequence only) obtained by the second mapping means may be referred to as a second type complex signal point, and a complex signal point (mixture of system bit sequence and parity bit sequence) obtained by the third mapping means may be referred to as a third type complex signal point. In addition, in the above example, the example that the complex signal point includes two bits has been described. However, similar mapping is performed also in a case where the complex signal point includes more than two bits.

### <4-4-3. Allocation to a plurality of complex signal points>

The communication apparatus allocates the transmission bit sequence to a plurality of complex signal points according to a predetermined rule. For example, it is assumed that the number of elements of the transmission resource is 60 and the modulation scheme is QPSK. In this case, the communication apparatus allocates the 120-bit transmission bit sequence to 60 complex signal points. In addition, it is assumed that the number of elements of the transmission resource is 60 and the modulation scheme is 16QAM. In this case, the communication apparatus allocates 240 bits to 60 complex signal points.

In allocating the transmission bit sequence to the plurality of complex signal points, the communication apparatus may use all or some of the above-described three mapping means (first to third mapping means).

As described above, the communication apparatus allocates the transmission bit sequence to the plurality of complex signal points according to the predetermined rule. As the predetermined rule, any one of the following rules (1) to (3) can be assumed.

### (1) First rule (priority to first mapping means)

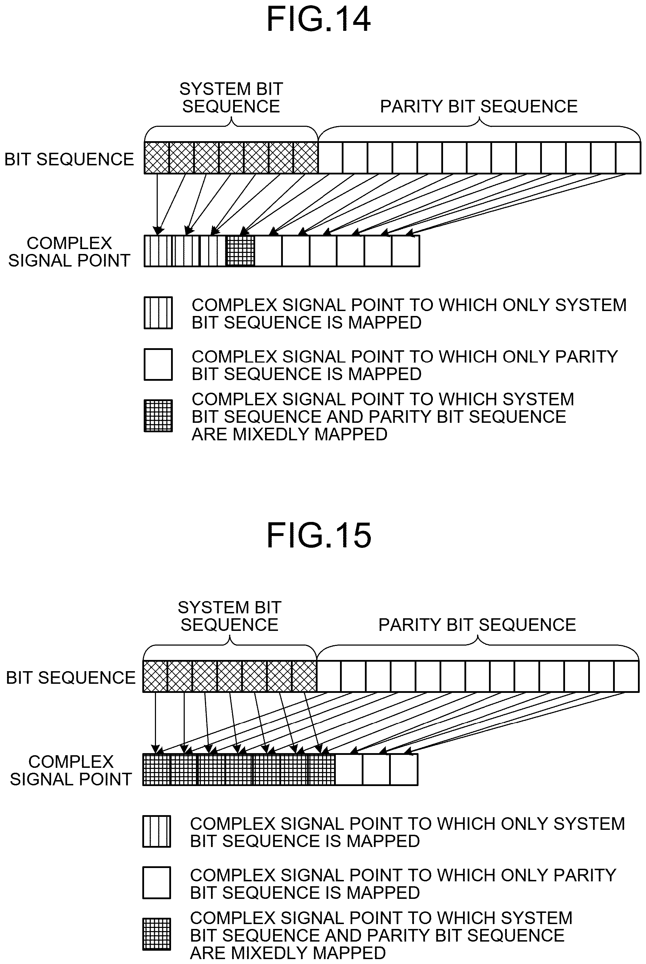

In the first rule, the communication apparatus gives priority to the first mapping means. In other words, according to the first rule, the communication apparatus preferentially maps the bits of the system bit sequence part to the complex signal points. FIG. 14 is a diagram illustrating mapping (first rule) of the transmission bit sequence to the plurality of complex signal points. First, the communication apparatus maps only the bits of the system bit sequence part to the complex signal points. Then, the communication apparatus maps the remaining bits of the system bit sequence part and bits of the parity bit sequence part to complex signal points. Further, the communication apparatus maps the bits of the remaining parity bit sequence part to complex signal points.

### (2) Second rule (priority to third mapping means)

In the second rule, the communication apparatus gives priority to the third mapping means. In other words, according to the second rule, the communication apparatus preferentially generates a complex signal point in which bits of the system bit sequence part and bits of the system bit sequence part are mixed. FIG. 15 is a diagram illustrating mapping (second rule) of the transmission bit sequence to the plurality of complex signal points. First, the communication apparatus generates the complex signal point in which bits of the system bit sequence part and bits of the system bit sequence part are mixed. Then, the communication apparatus maps the remaining bits of the system bit sequence part or the remaining bits of the parity bit sequence part to the complex signal points.

### (3) Third rule (order change of transmission bit sequence)

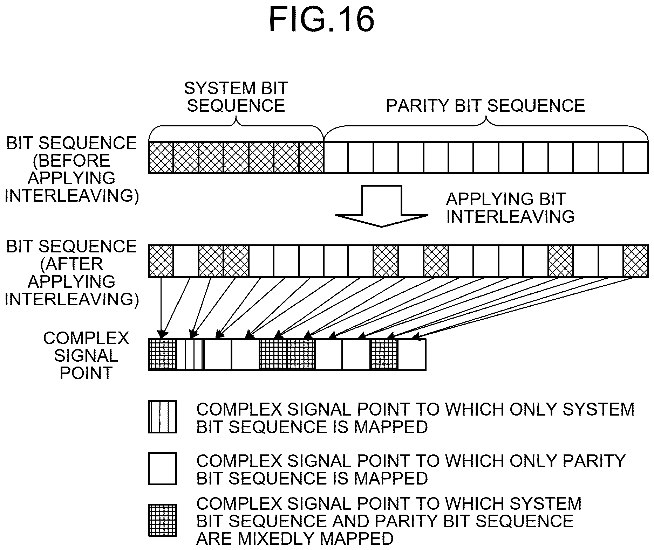

In the third rule, the communication apparatus changes an order of the transmission bit sequence before mapping to the complex signal points. FIG. 16 is a diagram illustrating mapping (third rule) of the transmission bit sequence to the plurality of complex signal points. First, the communication apparatus changes the order of the transmission bit sequence by applying bit interleaving to the transmission bit sequence. Then, the communication apparatus sequentially allocates the transmission bit sequence whose order has been changed to the complex signal points from the top. Note that the communication apparatus may allocate the bits to the complex signal points in order from the last bit instead of the first bit, or may allocate the bits to the complex signal points in an order determined by another method.

In the following description, a mapping method based on the first rule may be referred to as a first mapping method, a mapping method based on the second rule may be referred to as a second mapping method, and a mapping method based on the third rule may be referred to as a third mapping method.

### <4-4-4. Switching of mapping method>

The communication apparatus switches the mapping method based on a predetermined condition. For example, the communication apparatus switches the mapping method to any one of the first to third mapping methods based on the predetermined condition regarding the channel state.

For example, when a channel state fluctuation is smaller than a first criterion (e.g., when S/N fluctuation within a certain time is less than a first threshold), the communication apparatus uses the first mapping method. Further, when the channel state fluctuation is larger than the first criterion and smaller than a second criterion larger than the first criterion (e.g., when the S/N fluctuation within a certain time is greater than the first threshold and less than a second threshold that is greater than the first threshold), the communication apparatus uses the second mapping method. Further, when the channel state fluctuation is larger than the second criterion (e.g., when the S/N fluctuation within a certain period is greater than the second threshold), the communication apparatus uses the third mapping method.

Furthermore, for example, when an amount of resource whose channel state is better than the predetermined criterion is larger than the first criterion and smaller than the second criterion larger than the first criterion, the communication apparatus uses the first mapping method. Furthermore, when the amount of resource whose channel state is better than the predetermined criterion is larger than the second criterion larger than the first criterion, the communication apparatus uses the second mapping method. Furthermore, when the resource whose channel state is better than the predetermined criterion is less than the first criterion, the communication apparatus uses the third mapping method. In addition, the communication apparatus may use the third mapping method also when the amount of resource whose channel state is better than the predetermined criterion is larger than a third criterion larger than a second state.

As a result, optimal mapping can be performed in accordance with the channel state (e.g., channel state fluctuation), so that the communication apparatus can achieve high communication performance (e.g., high frequency utilization efficiency).

Note that the predetermined condition is not limited to the condition regarding the channel state. The predetermined condition may be the same as the "predetermined condition" described later in <4-5>. For example, the communication apparatus may switch the mapping method based on at least one of the channel state, a used channel (logical channel/transport channel/physical channel), and an RRC state (RRC Idle/inactive/connected).

### <4-5. Mapping of complex signal point to transmission resource>

Next, mapping of the complex signal points to the transmission resource will be described.

### <4-5-1. Outline>

The communication apparatus (base station 20 or terminal device 40) maps the complex signal point generated in <4-4> to the transmission resource determined in <4-3> based on the predetermined condition. For example, the communication apparatus maps the complex signal point to the transmission resource based on the predetermined condition regarding the channel state.

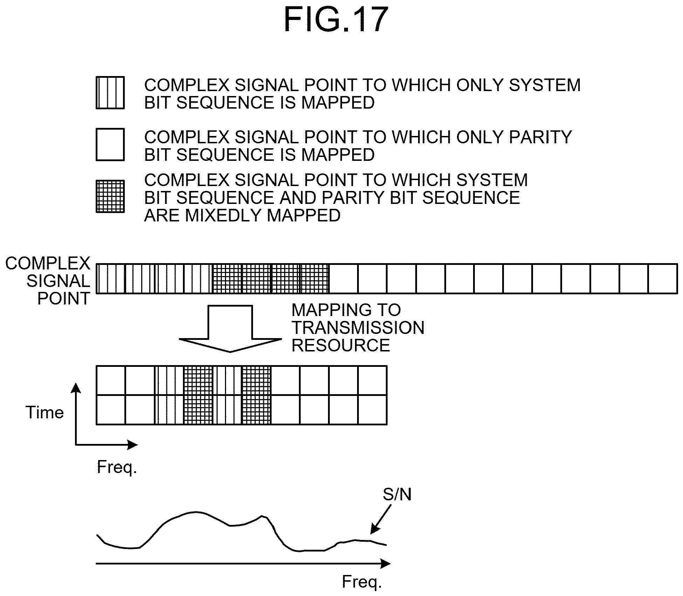

FIG. 17 is a diagram illustrating a state in which the complex signal point is mapped to the transmission resource based on the predetermined condition regarding the channel state. More specifically, FIG. 17 illustrates an example in which the complex signal point to which only the bits of the system bit sequence part are mapped is mapped to the resource having a good channel state in preference to other complex signal points.

In the example in FIG. 17, the communication apparatus first maps the first type complex signal points to the transmission resource whose channel state (e.g., S/N) satisfies a predetermined criterion. Here, the first type complex signal points are complex signal points to which only the bits of the system bit sequence part are mapped. The communication apparatus then maps the third type complex signal points to the remaining transmission resources among the resources whose channel state (e.g., S/N) meets the predetermined criterion. Here, the third type complex signal points are complex signal points to which the bits of the system bit sequence part and the bits of the parity bit sequence are mixedly mapped. Finally, the communication apparatus maps complex signal points to which only the bits of the parity bit sequence are mapped to the remaining transmission resources.

### <4-5-2. Mapping priority>

In mapping the complex signal points to the transmission resources, it is desirable that the priority order of mapping is determined between the complex signal points.

Here, the priority order of mapping is an order for determining which type of complex signal point is preferentially mapped to the transmission resources among the plurality of types of complex signal points. For example, it is assumed that the predetermined condition is a condition that the "complex signal points are mapped in order from an allocated transmission resource with good channel state". In this case, the priority order of mapping is an order for determining which type of complex signal point is allocated to the transmission resource. Note that the "priority order" can be replaced with other words such as "priority level" having the same meaning as the "priority order".

Here, the plurality of types of complex signal points include at least one type of complex signal points among the complex signal points to which only bits of the system bit sequence part are mapped (first type complex signal points), the complex signal points to which only bits of the parity bit sequence part are mapped (second type complex signal points), and the complex signal points to which bits of the system bit sequence part and bits of the parity bit sequence are mixedly mapped (third type complex signal points).

As the mapping priority order, the following orders (1) to (3) are assumed. Here, priority order (1) having a high ratio of bits of the system bit sequence part is given high priority and priority order (3) having a low ratio of bits of the system bit sequence part is given low priority. In other words, in the following example, the communication apparatus gives priority to a complex signal point having a high ratio of bits of the system bit sequence part which has high importance. For example, when the predetermined condition is a condition that "complex signal points are mapped in order from allocated transmission resources with a good channel state", the communication apparatus allocates the complex signal points to a transmission resource with good channel state in the order of (1) to (3).
(1) First type complex signal points (complex signal points to which only bits of the system bit sequence part are mapped)
(2) Third type complex signal points (complex signal points to which bits of system bit sequence part and bits of parity bit sequence part are mixedly mapped)
(3) Second-type complex signal points (complex signal points to which only bits of parity bit sequence part are mapped)

Note that the mapping priority order is not limited to the above order. Furthermore, the core network (e.g., management device 10) may control the mapping priority order instead of the base station 20 and the terminal device 40.

Furthermore, it is conceivable to prioritize the third type complex signal points in (2). For example, assuming that the modulation scheme is 16QAM, one complex signal point includes four bits. Therefore, the third type complex signal points in (2) are divided into the following three types (2-1) to (2-3).
(2-1) Three bits from system bit sequence part + One bit from parity bit sequence part
(2-2) Two bits from system bit sequence part + Two bits from parity bit sequence part
(2-3) One bit from system bit sequence part + Three bits from parity bit sequence part

Again, the communication apparatus prioritizes a complex signal point having a high ratio of bits of the system bit sequence part. For example, it is assumed that the predetermined condition is a condition that the "complex signal points are mapped in order from an allocated transmission resource with good channel state". In this case, the communication apparatus allocates the third type complex signal points to the transmission resources with good channel state in the order of (2-1), (2-2), and (2-3).

Furthermore, it is conceivable that the plurality of types of complex signal points include complex signal points including different modulation schemes. For example, when complex signal points of QPSK and 16QAM are mixed, the following six types of complex signal points exist. Hereinafter, QPSK and 16QAM are described as examples, but modulation schemes other than QPSK and 16QAM may be included, or three or more types of modulation schemes may be included.
(1) Complex signal points of first type QPSK modulation scheme (complex signal points to which only bits of the system bit sequence part are mapped)
(2) Complex signal points of third type QPSK modulation scheme (complex signal points to which bits of the system bit sequence part and bits of the parity bit sequence part are mixedly mapped)
(3) Complex signal points of second type QPSK modulation scheme (complex signal points to which only bits of the parity bit sequence part are mapped)
(4) Complex signal points of first type 16QAM modulation scheme (complex signal points to which only bits of the system bit sequence part are mapped)
(5) Complex signal points of third type 16QAM modulation scheme (complex signal points to which bits of the system bit sequence part and bits of the parity bit sequence part are mixedly mapped)
(6) Complex signal points of second type 16QAM modulation scheme (complex signal points to which only bits of the parity bit sequence part are mapped)

In this case, for example, the following is considered as the priority order.

### 1. High-order modulation priority

In this system, high-order modulation complex signal points are preferentially mapped to allocated transmission resources with good channel state. In the above example of the QPSK and 16QAM, 16QAM complex signal points are preferentially mapped to the allocated transmission resources with good channel state. In this case, (4), (5), and (6) of the 16QAM complex signal points are mapped to the allocated transmission resources with good channel state in this order, and then (1), (2), and (3) of the QPSK complex signal points are mapped to the allocated transmission resources with good channel state in this order.

### 2. System bit number priority

In this system, a complex signal point having a large number of system bits in the complex signal point is preferentially mapped to the allocated transmission resources with good channel state. For example, in the above QPSK and 16QAM examples, mapping is performed to the allocated transmission resources with good channel state in the following order of (A) to (H).
(A) Complex signal points of 16QAM modulation scheme including four system bits
(B) Complex signal points of 16QAM modulation scheme including three system bits
(C) Complex signal points of 16QAM modulation scheme including two system bits
(D) Complex signal points of QPSK modulation scheme including two system bits
(E) Complex signal points of 16QAM modulation scheme including one system bit
(F) Complex signal points of QPSK modulation scheme including one system bit
(G) Complex signal points of 16QAM modulation scheme including zero system bits
(H) Complex signal points of QPSK modulation scheme including zero system bits

### <4-5-3. Predetermined condition>

As described above, the communication apparatus (base station 20 or terminal device 40) maps the complex signal point to the transmission resource according to the predetermined condition. Here, the predetermined condition may be any of the following conditions (1) to (4). In addition, the predetermined condition may be a combination of a plurality of conditions selected from the following (1) to (4). Note that the predetermined condition is not limited to the following conditions.

### (1) Channel state

As the predetermined condition, a condition regarding the channel state is assumed. For example, the communication apparatus allocates the complex signal points with high priority (e.g., complex modulation symbols corresponding to TB system bit sequence (TB bit sequence carried from an upper layer)) in order from the allocated transmission resources with good channel state. Alternatively, the communication apparatus may allocate the complex signal points with high priority to the transmission resources whose channel state satisfies a predetermined threshold.

Here, the channel state may be calculated from, for example, reference signal received power (RSRP). Further or alternatively, the channel state may be any one or a combination of reference signal received quality (RSRQ), signal to interference plus noise ratio (SINR), and received signal strength indicator (RSSI). Furthermore, a downlink channel state may be a state in which the terminal device 40 measures a reference signal such as a channel state information-reference signal (CSI-RS) or a synchronization signal (SS) transmitted from the base station 20 and feeds back the reference signal to the base station 20 by CSI feedback or the like. Furthermore, an uplink channel state may be a state in which the base station 20 measures a reference signal such as a sounding reference signal (SRS) transmitted from the terminal device 40.

Note that the communication apparatus may switch, according to the channel state, the mapping method of the transmission bit sequence to the complex signal point, the mapping method of the complex signal point to the transmission resource, or the mapping priority order. Furthermore, the communication apparatus may switch the predetermined condition according to the channel state. Furthermore, the communication apparatus may determine whether or not the technology described in the present embodiment is applied according to the channel state.

### (2) Transmission parameter

As the predetermined condition, a condition regarding a transmission parameter is assumed. For example, the communication apparatus determines the transmission resource to which the complex signal point having a high priority is to be allocated based on the transmission parameter.

As the transmission parameter, for example, a modulation and coding scheme (MCS), a code rate, the number of layers, a band width part (BWP), the number of resource blocks, a redundancy version (RV), a new data indicator (NDI), a HARQ process number, an antenna port, and a 5G QoS identifier (5QI) are conceived.

For example, a transmission resource for which a high MCS is configured is estimated to be a resource with good channel state. Therefore, the communication apparatus allocates a complex signal point having a higher priority to a transmission resource having a higher MCS.

For example, the transmission resource for which the high code rate is set is estimated to be a resource with good channel state. Therefore, the communication apparatus allocates the complex signal point having a higher priority to the transmission resource having a higher code rate.

For example, the transmission resource in which a plurality of layers is configured is estimated to be a resource with good channel state. Therefore, the communication apparatus allocates a complex signal point having a higher priority to a transmission resource having a larger number of layers.

Note that the communication apparatus may switch the mapping method of the transmission bit sequence to the complex signal point, the mapping method of the complex signal point to the transmission resource, or the mapping priority order according to the transmission parameter. For example, the communication apparatus may switch the mapping method of the complex signal point to the transmission resource by the BWP. Furthermore, the communication apparatus may switch the predetermined condition according to the transmission parameter. Furthermore, the communication apparatus may determine whether or not the technology described in the present embodiment is applied according to the transmission parameter.

### (3) Channel used

As the predetermined condition, a condition regarding the channel used is assumed. For example, the communication apparatus determines the transmission resource to which the complex signal point having a high priority is to be allocated based on the channel used. Here, the channel used is a channel used for transmission by the communication apparatus. The channel used may be a logical channel, a transport channel, or a physical channel.

Here, examples of the logical channel include a broadcast control channel (BCCH), a paging control channel (PCCH), a common control channel (CCCH), a dedicated control channel (DCCH), and a dedicated traffic channel (DTCH) .

Examples of the transport channel include a broadcast channel (BCH), a downlink shared channel (DL-SCH), an uplink shared channel (UL-SCH), and a paging channel (PCH).

Examples of the physical channel include a physical broadcast channel (PBCH), a physical downlink control channel (PDCCH), a physical uplink control channel (PUCCH), a physical sidelink control channel (PSCCH), a physical downlink shared channel (PDSCH), a physical uplink shared channel (PUSCH), a physical sidelink shared channel (PSSCH), and a physical random access channel (PRACH).

Note that the communication apparatus may switch the mapping method of the transmission bit sequence to the complex signal point, the mapping method of the complex signal point to the transmission resource, or the mapping priority order according to the channel used. Furthermore, the communication apparatus may switch the predetermined condition depending on the channel used. Furthermore, the communication apparatus may determine whether or not the technology described in the present embodiment is applied according to the channel used.

### (4) RRC state

As the predetermined condition, a condition regarding the RRC state (RRC idle/inactive/connected) is assumed. For example, the communication apparatus determines a transmission resource to which a complex signal point having a high priority is to be allocated based on the RRC state.

Note that the communication apparatus may switch the mapping method of the transmission bit sequence to the complex signal point, the mapping method of the complex signal point to the transmission resource, or the mapping priority order according to the RRC state. Furthermore, the communication apparatus may switch the predetermined condition according to the RRC state. Furthermore, the communication apparatus may determine whether or not the technology described in the present embodiment is applied according to the RRC state. For example, the communication apparatus may not apply the technology described in the present embodiment when the RRC state is RRC idle or inactive, and may apply the technology described in the present embodiment when the RRC state is RRC connected.

### <4-5-4. Switching of mapping means>

The communication apparatus (base station 20 or terminal device 40) may switch the mapping means for mapping the complex signal point to the transmission resource to any one of the plurality of mapping means based on the predetermined condition described in <4-5-3>. Here, the following (1) to (3) can be conceived as the plurality of mapping means.

### (1) Mapping means of the present embodiment

As the plurality of mapping means, the mapping means of the present embodiment is conceived. The mapping means of the present embodiment is the mapping means described in <4-5-1> to <4-5-3>. In the following description, unless otherwise specified, "the mapping means of the present embodiment" refers to the mapping means described in <4-5-1> to <4-5-3>.

### (2) Frequency-prioritized mapping

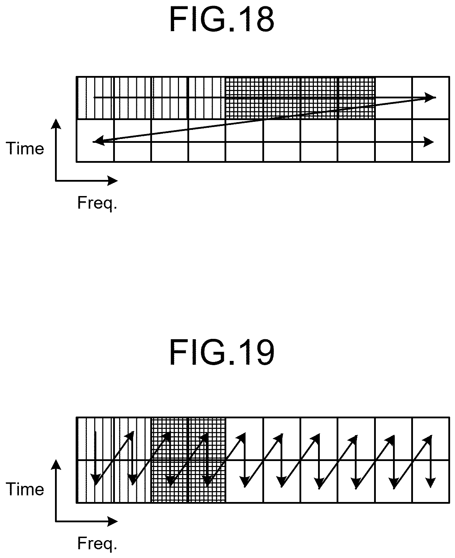

As the plurality of mapping means, frequency-prioritized mapping is conceived. FIG. 18 is a diagram illustrating frequency-prioritized mapping. As illustrated in FIG. 18, the frequency-prioritized mapping is a mapping means that sequentially maps complex signal points in descending priority order along the frequency axis direction.

### (3) Time-prioritized mapping

As the plurality of mapping means, time-prioritized mapping is conceived. FIG. 19 is a diagram illustrating the time prioritized mapping. As illustrated in FIG. 19, the time-prioritized mapping is a mapping means that sequentially maps the complex signal points in descending priority order along the time axis direction.

### <4-5-5. Notification means for information on mapping means>

The information regarding the mapping means may be notified from the base station 20 to the terminal device 40. Here, the information regarding the mapping means may be information for determining which of the plurality of mapping means is to be used for mapping the complex signal points to the transmission resources. Furthermore, the information regarding the mapping means may be information for determining which of the plurality of mapping means is to be used for mapping the transmission bit sequence to the complex signal points. The mapping means can be rephrased as the mapping method.

### As the notification means of the information regarding the mapping means, an explicit notification and an implicit notification are conceived. Specifically, the following is assumed as the notification means of the information regarding the mapping means. Note that the notification means is not limited to the following.

As the explicit notification, the following (1-1) to (1-4) are assumed.
(1-1) Notification included in DCI, UCI, and SCI
(1-2) Notification Included in MAC CE
(1-3) Notification by RRC signaling (notification included in predetermined RRC message)
(1-4) Notification included in system information

The following (2-1) to (2-3) are assumed as the implicit notification.
(2-1) Association with transmission parameter
(2-2) Association with channel used (logical channel, transport channel, and physical channel)
(2-3) Association with RRC state

Furthermore, or alternatively, the notification means for the information regarding the mapping means may be realized by a combination of at least two of (1-1) to (1-4) and (2-1) to (2-3) described above. For example, a plurality of configurations related to the mapping means may be included in the RRC message and notified, and the actually used configuration may be included in the DCI and notified.

### <4-6. Sequence example>

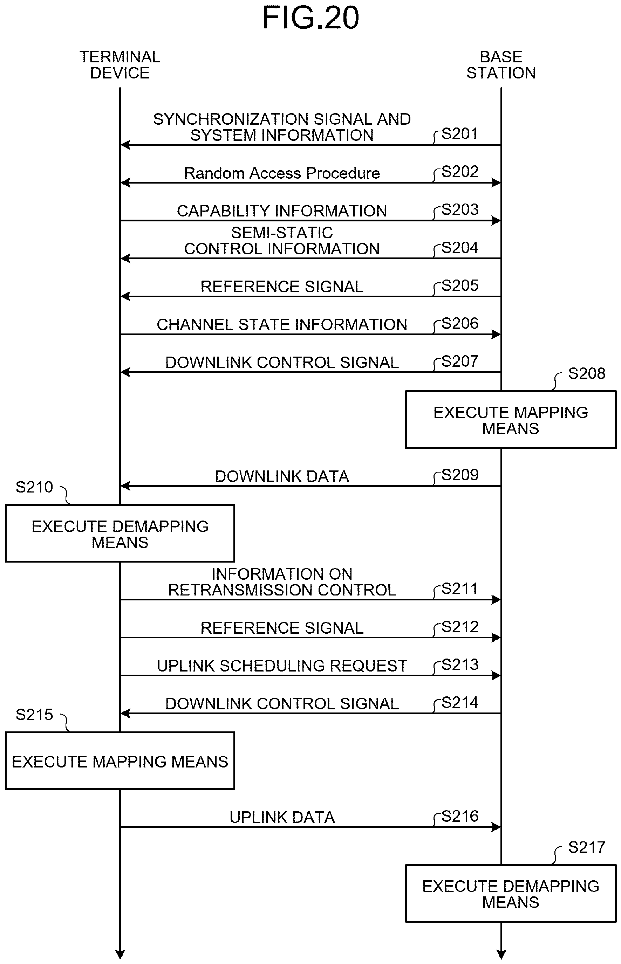

The signal processing of the present embodiment has been described above, and a sequence example according to the signal processing of the present embodiment will be described below. FIG. 20 is a diagram illustrating the sequence example according to signal processing of the present embodiment.

First, the transmission unit 232 of the base station 20 transmits a synchronization signal and system information (Step S201). Then, the base station 20 and the terminal device 40 execute a random access procedure (Step S202) .

When the random access procedure is successful, the transmission unit 432 of the terminal device 40 transmits its own capability information to the base station 20 (Step S203). The capability information includes information indicating whether or not the terminal device 40 is capable of executing the mapping means of the present embodiment. As described above, the "mapping means of the present embodiment" is the mapping means described in <4-5-1> to <4-5-3>.

When the terminal device 40 has the capability to execute the mapping means of the present embodiment, the transmission unit 232 of the base station 20 notifies the terminal device 40 of semi-static control information related to the mapping means of the present embodiment. The reception unit 431 of the terminal device 40 receives the semi-static control information related to the mapping means from the base station 20 (Step S204). For example, the reception unit 431 of the terminal device 40 receives information regarding switching of the mapping unit. For example, the reception unit 431 of the terminal device 40 receives information of the mapping means and/or a demapping means to be used by the terminal device 40. Furthermore, the reception unit 431 of the terminal device 40 may receive information regarding the predetermined condition.

Next, the transmission unit 232 of the base station 20 transmits a reference signal (e.g., CSI-RS) for downlink channel state estimation to the terminal device 40 (Step S205). Then, the transmission unit 432 of the terminal device 40 notifies the base station 20 of the downlink channel state information (e.g., CQI, RI, and PMI) (Step S206) .

Then, the transmission unit 432 of the base station 20 transmits the downlink control signal to the terminal device 40 (Step S207). For example, the transmission unit 432 of the base station 20 transmits the DCI including the information regarding the mapping means of the present embodiment to the terminal device 40. The reception unit 431 of the terminal device 40 receives the DCI including the information regarding the mapping means of the present embodiment. For example, the reception unit 431 of the terminal device 40 receives information of the mapping means and/or a demapping means to be used by the terminal device 40. Furthermore, the reception unit 431 of the terminal device 40 may receive information regarding the predetermined condition.

Next, the base station 20 executes the mapping means of the present embodiment (Step S208). Specifically, the generation unit 233 of the base station 20 generates a transmission bit sequence including the system bit sequence part and the parity bit sequence part. Then, the processing unit 234 of the base station 20 maps the transmission bit sequence to the complex signal point. In addition, the processing unit 234 of the base station 20 maps the complex signal point mapped with the transmission bit sequence to the transmission resource. Then, the transmission unit 232 of the base station 20 transmits the downlink data to the terminal device 40 (Step S209) .

The processing unit 434 of the terminal device 40 executes the demapping means corresponding to the mapping means in Step S208 to acquire the downlink data (Step S210). Then, the terminal device 40 notifies the base station 20 of information on retransmission control (e.g., ACK/NACK) (Step S211) .

Subsequently, the transmission unit 432 of the terminal device 40 transmits a reference signal (e.g., SRS) for uplink channel state estimation to the base station 20 (Step S212). Then, the transmission unit 432 of the terminal device 40 transmits an uplink scheduling request (e.g., scheduling request (SR)) to the base station 20 (Step S213). Then, the transmission unit 232 of the base station 20 transmits a downlink control signal to the terminal device 40 (Step S214). For example, the transmission unit 232 of the base station 20 transmits the DCI including the information regarding the mapping means of the present embodiment to the terminal device 40.

Next, the terminal device 40 executes the mapping means of the present embodiment (Step S215). Specifically, the generation unit 433 of the terminal device 40 generates the transmission bit sequence including the system bit sequence part and the parity bit sequence part. Then, the processing unit 434 of the terminal device 40 maps the transmission bit sequence to the complex signal point. Furthermore, the processing unit 434 of the terminal device 40 maps the complex signal point mapped with the transmission bit sequence to the transmission resource. Then, the transmission unit 432 of the terminal device 40 transmits the uplink data to the base station 20 (Step S216) .

The processing unit 234 of the base station 20 executes the demapping means corresponding to the mapping means in Step S215 to acquire the downlink data (Step S217) .

### <4-7. Application example>

The sequence example has been described above, and application examples will be described below.

### <4-7-1. Example using machine learning>

The mapping means of the present embodiment can be realized by using machine learning.

For example, the base station 20 and the terminal device 40 share a model learned by machine learning (hereinafter referred to as an arithmetic model). Here, the arithmetic model may be a learning model learned such that at least data (transmission bit sequence or complex signal point mapped with the transmission bit sequence) of a mapping source and channel state information (e.g., S/N of transmission resource) are input, and at least, for example, a complex signal point sequence mapped with the transmission bit sequence or a sequence after the complex signal point is mapped to a transmission resource is output. The base station 20 and the terminal device 40 implement the mapping means of the present embodiment by inputting the data of the mapping source and the channel state information to the arithmetic model.

Hereinafter, an example using machine learning will be described.

The communication apparatus (base station 20 or terminal device 40) acquires a model learned by machine learning (hereinafter, referred to as the arithmetic model). This arithmetic model may be learned by the base station 20 or may be learned by the terminal device 40. Furthermore, the arithmetic model may be learned by an information processor (e.g., management device 10) other than the base station 20 and the terminal device 40.

Input data to the arithmetic model and output data from the arithmetic model can be assumed as follows. Note that the input data and the output data may be any of the following data, or may be a combination of a plurality of pieces of data among the following data. Naturally, the input data and the output data may be all of the following data. Note that the input data and the output data are not limited to the following examples. Any parameter required for the present implementation can be applied as the input data and the output data.

### (Example of input data)

(1-1) CodeWord bit sequence
(1-2) MCS (Modulation and Coding Scheme),
(1-3) Code rate
(1-4) Number of layers
(1-5) BWP (Band Width Part)
(1-6) Number of resource blocks
(1-7) RV (Redundancy Version)
(1-8) NDI (New Data Indicator),
(1-9) HARQ process number
(1-10) Antenna port
(1-11) Channel state (e.g., reference signal, CSI feedback information)

### (Example of output data)

(2-1) System bit sequence and the parity bit sequence subjected to order conversion before mapping to the complex signal points
(2-2) Complex signal point sequence after mapping the system bit sequence and the parity bit sequence to the complex signal points
(2-3) Sequence after mapping the complex signal points to the transmission resources

In the following description, the mapping means described in <4-7-1> may be referred to as "mapping means using machine learning".

### <4-7-2. Sequence example>

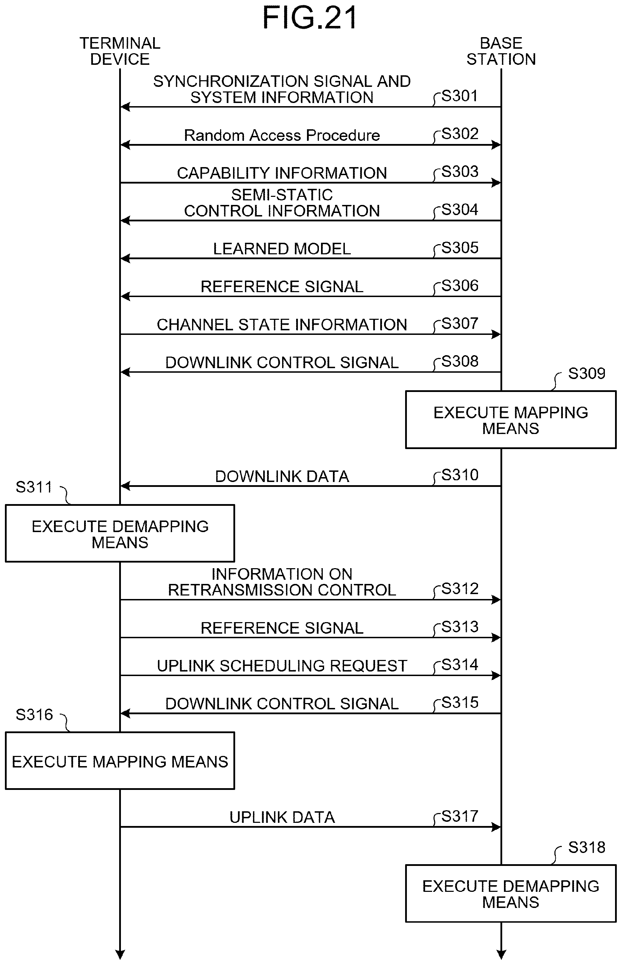

As a sequence example of the example using machine learning, the following sequence example can be assumed. Note that, in the following sequence example, the trained arithmetic model is notified from the base station 20 to the terminal device 40, but the learning may be performed by the terminal device 40. In this case, the terminal device 40 may notify the base station 20 of the learned arithmetic model learned by the terminal device 40. FIG. 21 is a diagram illustrating the sequence example of the example using machine learning.

First, the base station 20 transmits the synchronization signal and the system information (Step S301). Then, the base station 20 and the terminal device 40 execute a random access procedure (Step S302).

When the random access procedure is successful, the terminal device 40 transmits its own capability information to the base station 20 (Step S303). The capability information includes information indicating whether or not the terminal device 40 has capability of executing the mapping means using machine learning (mapping means using the arithmetic model described in <4-7-1>).

When the terminal device 40 has an execution capability of the mapping means using machine learning, the base station 20 notifies the terminal device 40 of the semi-static control information regarding the mapping means using machine learning (Step S304). For example, the base station 20 notifies the mapping means and/or the demapping means used by the terminal device 40. In addition, the base station 20 notifies the terminal device 40 of the mapping means and the learned arithmetic model necessary for execution of the mapping means (Step S305).

Next, the base station 20 transmits the reference signal (e.g., CSI-RS) for the downlink channel state estimation to the terminal device 40 (Step S306). Then, the terminal device 40 notifies the base station 20 of the downlink channel state information (e.g., CQI, RI, and PMI) (Step S307). Then, the base station 20 transmits the downlink control signal to the terminal device 40 (Step S308). For example, the base station 20 transmits DCI including information regarding the mapping means using machine learning to the terminal device 40.

Next, the base station 20 executes the mapping means using machine learning using the learned arithmetic model (Step S309). Then, the base station 20 transmits the downlink data to the terminal device 40 (Step S310). The terminal device 40 executes the demapping means corresponding to the mapping means in Step S208 to acquire the downlink data (Step S311). At this time, the terminal device 40 executes the demapping means using the learned arithmetic model acquired in Step S305. Then, the terminal device 40 notifies the base station 20 of the information on retransmission control (e.g., ACK/NACK) (Step S312).

Subsequently, the terminal device 40 transmits the reference signal (e.g., SRS) for the uplink channel state estimation to the base station 20 (Step S313). Then, the terminal device 40 transmits the uplink scheduling request (e.g., scheduling request (SR)) to the base station 20 (Step S314). Then, the base station 20 transmits the downlink control signal to the terminal device 40 (Step S315). For example, the base station 20 transmits DCI including information regarding the mapping means using machine learning to the terminal device 40.

Next, the terminal device 40 executes the mapping means using machine learning (Step S316). At this time, the terminal device 40 executes the mapping means using the learned arithmetic model acquired in Step S305. Then, the terminal device 40 transmits the uplink data to the base station 20 (Step S317). The base station 20 executes the demapping means corresponding to the mapping means in Step S215 to acquire the uplink data. At this time, the base station 20 executes the mapping means using the learned arithmetic model (Step S318).

### <4-7-3. Arithmetic model>

The arithmetic model described above may be, for example, a neural network model obtained by machine learning (deep learning.). This neural network model includes layers called an input layer including a plurality of nodes, a hidden layer (or intermediate layer), and an output layer. Each of the nodes is connected via an edge. Each layer has a function called an activation function, and each edge is weighted.

The neural network model based on deep learning includes a plurality of hidden layers. Therefore, setting the configuration of the neural network model means setting the number of hidden layers (or intermediate layers), the number of nodes of each layer, and the weight of each edge in addition to the input layer and the output layer. The transmission unit 432 of the base station 20 notifies the terminal device 40 of parameters for setting the configuration of the neural network model using the system information or dedicated signaling.

The neural network model may be, for example, a model in a form called convolution neural network (CNN), recurrent neural network (RNN), or long short-term memory (LSTM). Naturally, the neural network model is not limited to these models.

In the CNN, the hidden layer includes layers called a convolution layer and a pooling layer. In the convolution layer, filtering is performed by a convolution operation, and data called a feature map is extracted. In the pooling layer, information of the feature map output from the convolution layer is compressed, and down-sampling is performed. The CNN acquires, for example, information regarding each radio resource of the radio resources arranged over the frequency axis and the time axis such as a radio resource feature configured by each radio resource as an output layer when a reception strength of the reference signal is input, and information regarding the propagation channel. Here, the unit of each radio resource is, for example, a subcarrier, a resource element, a resource block, or the like.

The RNN has a network structure in which a value of the hidden layer is recursively input to the hidden layer, and for example, short-period time-series data is processed.

In the LSTM, an influence of the far past output can be held by introducing a parameter called a memory cell that holds the state of the intermediate layer with respect to the intermediate layer output of the RNN. In other words, the LSTM processes time-series data of a longer period than the RNN.

The arithmetic model includes one or more CNNs, RNNs, and/or LSTMs, and is dependent on or processed in parallel.

Note that the arithmetic model is not limited to a learning model using deep learning. For example, the arithmetic model may be a learning model using reinforcement learning. In the reinforcement learning, an action (setting) that maximizes a value is learned through trial and error. For example, the reinforcement learning is performed by giving reward to the use of a higher-order modulation scheme, a higher coding rate, a larger number of layers, less number of times of retransmission, or the like. As a result of learning, for example, the neural network model having the maximum frequency utilization efficiency is extracted as a value.

The base station 20 may acquire information regarding the reception strength of the uplink reference signal acquired by the reception processing unit 212. The information regarding the reception strength of the uplink reference signal is information reflecting the state of the channel between the base station 20 and the terminal device 40.

Furthermore, the base station 20 may acquire information reflecting the channel state between the base station 20 and the terminal device 40 from the terminal device 40. The information reflecting the channel state is acquired using, for example, dedicated signaling. More specifically, the base station 20 may transmit an RRC: UEInformationRequest message including a report request of information reflecting the channel state to the terminal device 40, and receive RRC: UEInformationResponse including information reflecting the channel state from the terminal device 40.

Note that the (R) AN 530 illustrated in FIG. 7 may provide parameters related to these arithmetic models via the system information for each cell. Alternatively, the (R) AN 530 may provide parameters related to these arithmetic models individually to the terminal devices 40 via the RRC (e.g., included in RRCSetup message or RRCReconfiguration message).

Here, the parameter related to the arithmetic model is a layer configuration of the input layer, the hidden layer (or intermediate layer), and the output layer, the number of nodes configuring each layer, and a weighting factor of the edge connecting nodes. For example, the configuration of the arithmetic model may be defined in advance, and the weighting coefficient of each edge may be provided as a variable. Furthermore, a configuration of a plurality of arithmetic models may be defined, and an ID for identifying the configuration of each arithmetic model may be allocated to provide the ID.

Note that the arithmetic model is applicable not only to terminal-optimized signal processing system but also to a cell-optimized signal processing system and a beam-optimized signal processing system.

### <<5. Modification>>

The above-described embodiments are examples, and various modifications and applications are possible.

For example, in the above-described embodiment, the base station 20 and the terminal device 40 execute the mapping means of the present embodiment, but the relay station 30 may execute the mapping means of the embodiment.

In <4-4-3> of the above-described embodiment, the first mapping method to the third mapping method have been exemplified as the mapping method of the transmission bit sequence to the complex signal point. However, the mapping method is not limited to the first to third mapping methods. For example, when the channel state satisfies a predetermined criterion (when the channel state is good), the communication apparatus (base station 20, relay station 30, or terminal device 40) may map, to the complex signal point, the transmission bit sequence from which at least a portion of bits of the parity bit sequence part is excluded in the transmission bit sequence including the system bit sequence part and the parity bit sequence part. Then, the communication apparatus may map the complex signal point to the transmission resource. As a result, the amount of data related to wireless communication can be reduced according to the channel state. For example, when the channel state is good, the amount of parity bits can be reduced to reduce the amount of data. Furthermore, the communication apparatus (base station 20, relay station 30, or terminal device 40) may control a bit length of the parity bit sequence part to be added, according to the channel state, in the transmission bit sequence including the system bit sequence part and the parity bit sequence part. For example, as the channel state becomes better, the bit length of the added parity bit sequence part is controlled to be shorter.

The control device that controls the management device 10, the base station 20, the relay station 30, and the terminal device 40 of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed in a computer, and the above-described processes are executed to configure the control device. Here, the control device may be a device (e.g., personal computer) outside the management device 10, the base station 20, the relay station 30 and the terminal device 40. Furthermore, the control device may be a device inside the management device 10, the base station 20, the relay station 30, and the terminal device 40 (e.g., the control unit 13, the control unit 23, the control unit 33, and the control unit 43) .

In addition, the above communication program may be stored in a disk device included in a server device on a network such as the Internet so that the communication program can be downloaded to the computer. In addition, the above-described functions may be realized by cooperation of an operating system (OS) and application software. In this case, a portion other than the OS may be stored in a medium and distributed, or a portion other than the OS may be stored in a server device and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution and integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing contents do not contradict each other. Furthermore, the order of each step illustrated in the flowchart of the above-described embodiments can be appropriately changed.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, for example, the present embodiments can adopt a configuration of cloud computing in which one function is shared and processed by a plurality of devices in cooperation via a network.

In addition, or alternatively, in some embodiments described above, the transport block includes the system bit sequence and the parity bit sequence, but the present disclosure is not limited to this interpretation. For example, from a viewpoint of the physical layer, a MAC PDU carried from a MAC layer indicates the transport block, and a parity bit sequence is added to a bit sequence included in the transport block (e.g., CRC attachment). Therefore, instead of the "system bit sequence" described above, "the bit sequence included in the transport block carried from the MAC layer" may be the subject of operation in some embodiments described above. Similarly, instead of the "parity bit sequence" described above, "parity bit sequence added to the bit sequence included in transport block carried from MAC layer" may be the subject of operation in some embodiments described above.

### <<6. Conclusion>>

As described above, according to the embodiment of the present disclosure, the base station 20 and the terminal device 40 generate the bit sequence including the system bit sequence part and the parity bit sequence part. Then, the base station 20 and the terminal device 40 perform at least one of mapping of the generated bit sequence to the complex signal point and mapping of the complex signal point mapped with the bit sequence to the resource based on the predetermined condition regarding the channel state.

As a result, since the base station 20 and the terminal device 40 can perform optimal mapping according to the channel state, high communication performance (e.g., high frequency utilization efficiency) can be realized.

Although the embodiments of the present disclosure have been described above, the technical scope of the present disclosure is not limited to the above-described embodiments as it is, and various modifications can be made without departing from the gist of the present disclosure. In addition, the components of different embodiments and modifications may be appropriately combined.

Note that the effects of each embodiment described in the present specification are merely examples and not limited thereto, and other effects may be provided.

The present technology can also have the following configurations.
(1) A communication apparatus comprising:
   a generation unit that generates a bit sequence including a system bit sequence part and a parity bit sequence part; and
   a processing unit that performs at least one of mapping of the bit sequence to a complex signal point and mapping of the complex signal point mapped with the bit sequence to a resource, the mapping being performed based on a predetermined condition regarding a channel state.
(2) The communication apparatus according to (1), wherein
   the processing unit maps the bit sequence to the complex signal point based on the predetermined condition.
(3) The communication apparatus according to (2), wherein
   the processing unit switches a method of mapping the bit sequence to the complex signal point to any one of a plurality of predetermined mapping methods based on the channel state.
(4) The communication apparatus according to (3), wherein
   the processing unit switches the method of mapping the bit sequence to the complex signal point to any one of the plurality of predetermined mapping methods based on a fluctuation of the channel state.
(5) The communication apparatus according to (4), wherein
   the plurality of predetermined mapping methods include at least one of a first mapping method of sequentially mapping from a bit of the system bit sequence part, a second mapping method of giving priority to mixture of the bit of the system bit sequence part and a bit of the parity bit sequence part, and a third mapping method of mapping in a predetermined order after applying bit interleaving.
(6) The communication apparatus according to (5), wherein
   the processing unit uses:
   the first mapping method as the method of mapping the bit sequence to the complex signal point when the fluctuation of the channel state is smaller than a first criterion,
   the second mapping method as the method of mapping the bit sequence to the complex signal point when the fluctuation of the channel state is larger than the first criterion and smaller than a second criterion larger than the first criterion, and
   the third mapping method as the method of mapping the bit sequence to the complex signal point when the fluctuation of the channel state is larger than the second criterion.
(7) The communication apparatus according to any one of (1) to (6), wherein
   the processing unit maps the complex signal point mapped with the bit sequence to the resource based on the predetermined condition.
(8) The communication apparatus according to (7), wherein
   the processing unit maps a plurality of types of the complex signal point to the resource in a type order based on the predetermined condition, the plurality of types having different configurations of a bit of the system bit sequence part and a bit of the parity bit sequence part.
(9) The communication apparatus according to (8), wherein
   the plurality of types of the complex signal point includes at least one of a first type complex signal point to which only the bit of the system bit sequence part are mapped, a second type complex signal point to which only the bit of the parity bit sequence part are mapped, and a third type complex signal point to which the bit of the system bit sequence part and the bit of the parity bit sequence part are mixedly mapped.
(10) The communication apparatus according to (9), wherein
   at least the first type complex signal point is included in the plurality of types of the complex signal point, and
   the processing unit maps the first type complex signal point to the resource in preference to other types of the complex signal point based on the predetermined condition.
(11) The communication apparatus according to (10), wherein
   the processing unit maps the first type complex signal point to the resource having the channel state satisfying a predetermined criterion, the first type complex signal point being mapped in preference to the other types of the complex signal point.
(12) The communication apparatus according to (10) or (11), wherein
   at least the first type complex signal point and the third type complex signal point are included in the plurality of types of the complex signal point, and
   the processing unit maps the third type complex signal point to the resource based on the predetermined condition, the third type complex signal point given a priority next to the first type complex signal point.
(13) The communication apparatus according to (12), wherein
   the processing unit:
   maps the first type complex signal point to the resource having the channel state satisfying a predetermined criterion in preference to the other types of the complex signal point; and
   maps the third type complex signal point to the resource having the channel state satisfying the predetermined criterion, the third type complex signal point given the priority next to the first type complex signal point.
(14) The communication apparatus according to (13), wherein
   the plurality of types of the complex signal point includes at least a plurality of types of the third type complex signal point having different ratios of the bit of the system bit sequence part to the bit of the parity bit sequence part, and
   the processing unit preferentially maps the third type complex signal point having a high ratio of the bit of the system bit sequence part to the resource having the channel state satisfying the predetermined criterion.
(15) The communication apparatus according to any one of (1) to (14), wherein
   the processing unit maps the bit sequence, to the complex signal point, excluding at least a portion of bits of the parity bit sequence part when the channel state satisfies a predetermined criterion.
(16) The communication apparatus according to any one of (1) to (15), wherein
   the communication apparatus is a terminal device, and includes a reception unit that receives information regarding the predetermined condition from a base station, and
   the processing unit performs at least one of the mapping of the bit sequence to the complex signal point and the mapping of the complex signal point mapped with the bit sequence to the resource, the mapping being performed based on the predetermined condition.
(17) The communication apparatus according to (16), wherein
   the reception unit receives, from the base station, information regarding switching of a mapping means for mapping the complex signal point to the resource, and
   the processing unit switches the mapping means based on the information regarding the switching of the mapping means.
(18) The communication apparatus according to (17), wherein
   the reception unit receives, from the base station, information regarding a learning model learned using at least the bit sequence or the complex signal point and the information regarding the channel state as an input to output at least a complex signal point sequence mapped with the bit sequence or a sequence after the complex signal point is mapped to a transmission resource, and
   the processing unit inputs the bit sequence or the complex signal point to the learning model to perform at least one of the mapping of the bit sequence to the complex signal point and the mapping of the complex signal point mapped with the bit sequence to the resource.
(19) The communication apparatus according to any one of (1) to (18), wherein
   the communication apparatus is a base station, and
   the processing unit performs at least one of the mapping of the bit sequence to the complex signal point and the mapping of the complex signal point mapped with the bit sequence to the resource, the mapping being performed based on the predetermined condition.
(20) A communication method comprising:
   generating a bit sequence including a system bit sequence part and a parity bit sequence part; and
   performing at least one of mapping of the bit sequence to a complex signal point and mapping of the complex signal point mapped with the bit sequence to a resource, the mapping being performed based on a predetermined condition regarding a channel state.

### Reference Signs List

- 1: COMMUNICATION SYSTEM
- 10: MANAGEMENT DEVICE
- 20: BASE STATION
- 30: RELAY STATION
- 40: TERMINAL DEVICE
- 11: COMMUNICATION UNIT
- 21, 31, 41: WIRELESS COMMUNICATION UNIT
- 12, 22, 32, 42: STORAGE UNIT
- 13, 23, 33, 43: CONTROL UNIT
- 211, 311, 411: TRANSMISSION PROCESSING UNIT
- 212, 312, 412: RECEPTION PROCESSING UNIT
- 213, 313, 413: ANTENNA
- 231, 431: RECEPTION UNIT
- 232, 432: TRANSMISSION UNIT
- 233, 433: GENERATION UNIT
- 234, 434: PROCESSING UNIT

## Claims

1. A communication apparatus comprising:
a generation unit that generates a bit sequence including a system bit sequence part and a parity bit sequence part; and
a processing unit that performs at least one of mapping of the bit sequence to a complex signal point and mapping of the complex signal point mapped with the bit sequence to a resource, the mapping being performed based on a predetermined condition regarding a channel state.

2. The communication apparatus according to claim 1, wherein
the processing unit maps the bit sequence to the complex signal point based on the predetermined condition.

3. The communication apparatus according to claim 2, wherein
the processing unit switches a method of mapping the bit sequence to the complex signal point to any one of a plurality of predetermined mapping methods based on the channel state.

4. The communication apparatus according to claim 3, wherein
the processing unit switches the method of mapping the bit sequence to the complex signal point to any one of the plurality of predetermined mapping methods based on a fluctuation of the channel state.

5. The communication apparatus according to claim 4, wherein
the plurality of predetermined mapping methods include at least one of a first mapping method of sequentially mapping from a bit of the system bit sequence part, a second mapping method of giving priority to mixture of the bit of the system bit sequence part and a bit of the parity bit sequence part, and a third mapping method of mapping in a predetermined order after applying bit interleaving.

6. The communication apparatus according to claim 5, wherein
the processing unit uses:
the first mapping method as the method of mapping the bit sequence to the complex signal point when the fluctuation of the channel state is smaller than a first criterion,
the second mapping method as the method of mapping the bit sequence to the complex signal point when the fluctuation of the channel state is larger than the first criterion and smaller than a second criterion larger than the first criterion, and
the third mapping method as the method of mapping the bit sequence to the complex signal point when the fluctuation of the channel state is larger than the second criterion.

7. The communication apparatus according to claim 1, wherein
the processing unit maps the complex signal point mapped with the bit sequence to the resource based on the predetermined condition.

8. The communication apparatus according to claim 7, wherein
the processing unit maps a plurality of types of the complex signal point to the resource in a type order based on the predetermined condition, the plurality of types having different configurations of a bit of the system bit sequence part and a bit of the parity bit sequence part.

9. The communication apparatus according to claim 8, wherein
the plurality of types of the complex signal point includes at least one of a first type complex signal point to which only the bit of the system bit sequence part are mapped, a second type complex signal point to which only the bit of the parity bit sequence part are mapped, and a third type complex signal point to which the bit of the system bit sequence part and the bit of the parity bit sequence part are mixedly mapped.

10. The communication apparatus according to claim 9, wherein
at least the first type complex signal point is included in the plurality of types of the complex signal point, and
the processing unit maps the first type complex signal point to the resource in preference to other types of the complex signal point based on the predetermined condition.

11. The communication apparatus according to claim 10, wherein
the processing unit maps the first type complex signal point to the resource having the channel state satisfying a predetermined criterion, the first type complex signal point being mapped in preference to the other types of the complex signal point.

12. The communication apparatus according to claim 10, wherein
at least the first type complex signal point and the third type complex signal point are included in the plurality of types of the complex signal point, and
the processing unit maps the third type complex signal point to the resource based on the predetermined condition, the third type complex signal point given a priority next to the first type complex signal point.

13. The communication apparatus according to claim 12, wherein
the processing unit:
maps the first type complex signal point to the resource having the channel state satisfying a predetermined criterion in preference to the other types of the complex signal point; and
maps the third type complex signal point to the resource having the channel state satisfying the predetermined criterion, the third type complex signal point given the priority next to the first type complex signal point.

14. The communication apparatus according to claim 13, wherein
the plurality of types of the complex signal point includes at least a plurality of types of the third type complex signal point having different ratios of the bit of the system bit sequence part to the bit of the parity bit sequence part, and
the processing unit preferentially maps the third type complex signal point having a high ratio of the bit of the system bit sequence part to the resource having the channel state satisfying the predetermined criterion.

15. The communication apparatus according to claim 1, wherein
the processing unit maps the bit sequence, to the complex signal point, excluding at least a portion of bits of the parity bit sequence part when the channel state satisfies a predetermined criterion.

16. The communication apparatus according to claim 1, wherein
the communication apparatus is a terminal device, and includes a reception unit that receives information regarding the predetermined condition from a base station, and
the processing unit performs at least one of the mapping of the bit sequence to the complex signal point and the mapping of the complex signal point mapped with the bit sequence to the resource, the mapping being performed based on the predetermined condition.

17. The communication apparatus according to claim 16, wherein
the reception unit receives, from the base station, information regarding switching of a mapping means for mapping the complex signal point to the resource, and
the processing unit switches the mapping means based on the information regarding the switching of the mapping means.

18. The communication apparatus according to claim 17, wherein
the reception unit receives, from the base station, information regarding a learning model learned using at least the bit sequence or the complex signal point and the information regarding the channel state as an input to output at least a complex signal point sequence mapped with the bit sequence or a sequence after the complex signal point is mapped to a transmission resource, and
the processing unit inputs the bit sequence or the complex signal point to the learning model to perform at least one of the mapping of the bit sequence to the complex signal point and the mapping of the complex signal point mapped with the bit sequence to the resource.

19. The communication apparatus according to claim 1, wherein
the communication apparatus is a base station, and
the processing unit performs at least one of the mapping of the bit sequence to the complex signal point and the mapping of the complex signal point mapped with the bit sequence to the resource, the mapping being performed based on the predetermined condition.

20. A communication method comprising:
generating a bit sequence including a system bit sequence part and a parity bit sequence part; and
performing at least one of mapping of the bit sequence to a complex signal point and mapping of the complex signal point mapped with the bit sequence to a resource, the mapping being performed based on a predetermined condition regarding a channel state.
